# EUROPEAN PATENT SPECIFICATION

(11) **EP 4 548 297 B1**
(45) Date of publication and mention of the grant of the patent: **07.10.2026**
(21) Application number: 23813946.3
(22) Date of filing: 30.10.2023
(51) Int. Cl.: G06T 5/00, G06T 5/90

(54) **HIGH DYNAMIC RANGE VIDEO FORMATS WITH LOW DYNAMIC RANGE COMPATIBILITY**
VIDEOFORMATE MIT HOHEM DYNAMIKBEREICH UND KOMPATIBILITÄT MIT NIEDRIGEM DYNAMIKBEREICH
FORMATS VIDÉO À PLAGE DYNAMIQUE ÉLEVÉE À FAIBLE COMPATIBILITÉ DE PLAGE DYNAMIQUE

(30) Priority: 31.10.2022 US 202263421155 P; 16.01.2023 US 202363439271 P; 31.05.2023 WO PCT/US2023/023998
(43) Date of publication of application: 07.05.2025
(73) Proprietor: Google LLC, Mountain View, CA 94043 (US)
(72) Inventor: DEAKIN, Nicholas, Mountain View, California 94043 (US); ALHASSEN, Fares, Mountain View, California 94043 (US); STEPHENS, Abraham J., Mountain View, California 94043 (US); GEISS, Ryan, Mountain View, California 94043 (US); MURTHY, Kiran Kumar, Mountain View, California 94043 (US); PEEV, Emilian, Mountain View, California 94043 (US); SHEHANE, Patrick, Mountain View, California 94043 (US); CAMERON, Christopher, Mountain View, California 94043 (US); LEWIS, Andrew, Mountain View, California 94043 (US)
(74) Representative: Betten & Resch
(86) International application number: PCT/US2023/036292
(87) International publication number: WO 2024/097135

(56) References cited:
- US-A1- 2015 237 322
- US-A1- 2022 092 749
- US-B2- 10 440 379
- IS&T ELECTRONIC IMAGING (EI) SYMPOSIUM: "EI 2023 Plenary: Embedded Gain Maps for Adaptive Display of High Dynamic Range Images", 17 January 2023 (2023-01-17), XP093086658, Retrieved from the Internet <URL:https://www.youtube.com/watch?v=HBVBLV9KZNI&ab_channel=IS&TElectronicImaging(EI)Symposium> [retrieved on 20230927]
- JARON SCHNEIDER: "You Don't Need an HDR Display to See Android 14's 'Ultra HDR' Photos | PetaPixel", 12 May 2023 (2023-05-12), XP093087526, Retrieved from the Internet <URL:https://petapixel.com/2023/05/12/you-dont-need-an-hdr-display-to-see-android-14s-ultra-hdr-photos/> [retrieved on 20230929]
- ANONYMOUS: "Ultra HDR Image Format v1.0 | Android media | Android Developers", 12 May 2023 (2023-05-12), XP093135623, Retrieved from the Internet <URL:https://developer.android.com/media/platform/hdr-image-format> [retrieved on 20240227]

## Description

### CROSS-REFERENCE TO RELATED APPLICATIONS

This application claims priority to U.S. Provisional Patent Application No. 63/421,155, filed October 31, 2022 and titled HIGH DYNAMIC RANGE IMAGE FORMAT WITH LOW DYNAMIC RANGE COMPATIBILITY; U.S. Provisional Patent Application No. 63/439,271, filed January 16, 2023 and titled HIGH DYNAMIC RANGE IMAGE AND VIDEO FORMATS WITH LOW DYNAMIC RANGE COMPATIBILITY; and International Application No. PCT/US2023/023998, filed May 31, 2023 and titled HIGH DYNAMIC RANGE IMAGE FORMAT WITH LOW DYNAMIC RANGE COMPATIBILITY.

### BACKGROUND

Users of devices such as smartphones or other digital camera devices capture and store a large number of photos and videos in their image libraries. High dynamic range (HDR) images and videos can be captured by some cameras, which offer a greater dynamic range and a more true-to-life picture quality than low dynamic range (LDR) images and videos captured by many other (e.g., older) cameras. HDR images and videos are best viewed by a display device capable of displaying the full dynamic ranges of the HDR images and videos.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

US 2015/237322 A1 describes a method to encode high dynamic range and wide color gamut video content with a backward compatible base layer. The base layer may be an HDTV or UHDTV program with Rec.709 colorimetry coded with AVC/H.264 or HEVC/H.265. The coding method provides information for properly rendering the content on displays with a wide range of color and brightness capabilities.

### SUMMARY

Objects of the present disclosure are achieved by subject matters of the independent claims. Dependent claims define some of possible exemplary embodiments.

Implementations described herein relate to methods, devices, and computer-readable media to provide HDR video format with low dynamic range compatibility. In some implementations, a computer-implemented method includes obtaining a first video including a plurality of first frames, wherein each of the first frames depicts a respective scene, and the first frames have a first dynamic range; obtaining a second video including a plurality of second frames, wherein each of the second frames depicts the respective scene of a corresponding frame of the first frames, and the second frames have a second dynamic range that is different than the first dynamic range; and generating a recovery map track. Generating the recovery map track includes, for each first frame of the first frames and corresponding second frame of the second frames, generating a recovery map frame based on the first frame and the corresponding second frame, wherein the recovery map frame encodes differences in luminances between portions of the first frame and corresponding portions of the corresponding second frame. The first video and the recovery map track are provided in a video container, wherein the video container is readable to display a derived video based on applying the recovery map track to the first video, and the derived video includes a plurality of derived frames that have a dynamic range that is different than the first dynamic range.

Various implementations of the method are described. In some implementations, the differences in luminances are scaled by a range scaling factor that includes a ratio of a maximum luminance of the corresponding second frame to a maximum luminance of the first frame. In some implementations, the method further includes generating a metadata track that includes respective metadata frames related to corresponding recovery map frames, wherein providing the first video and the recovery map track in the video container includes providing the metadata track in the video container. In some implementations, the differences in luminances are scaled by a range scaling factor that includes a ratio of a maximum luminance of the corresponding second frame to a maximum luminance of the first frame, wherein the respective metadata frames in the timed metadata track include a respective range scaling factor associated with an associated recovery map frame of the recovery map track.

In some implementations, the second dynamic range is greater than the first dynamic range and the dynamic range of the derived frames is greater than the first dynamic range. In some implementations, the video container is readable to display the first video by a first display device capable of displaying the first dynamic range; a display the derived video by a second display device capable of displaying a dynamic range greater than the first dynamic range. In some implementations, obtaining the first video comprises performing range compression on the second video.

In some implementations, generating each recovery map frame includes encoding luminance gains such that applying the luminance gains to luminances of individual pixels of the first frame results in pixels corresponding to the corresponding second frame. In some implementations, generating each recovery map frame includes encoding the luminance gains in a logarithmic space, and wherein values of the recovery map frame are proportional to the difference of logarithms of the luminances divided by a logarithm of the range scaling factor. In some implementations, generating each recovery map frame is based on: recovery(x, y) = log(pixel_gain(x, y)) / log(range scaling factor), wherein recovery(x,y) is the recovery map frame for pixel position (x, y) of the corresponding second frame, and pixel_gain(x,y) is a ratio of luminances at the position (x, y) of the corresponding second frame to the first frame.

In some implementations, generating each recovery map frame includes encoding the recovery map frame into a bilateral grid. In some implementations, providing the recovery map track in the video container includes encoding the recovery map track to have a different resolution than the first video and have the same aspect ratio as an aspect ratio of the first video. In some implementations, the method further includes obtaining the video container; determining to display the second video by the second display device; scaling a plurality of pixel luminances of the first frames of the first video in the frame container based on a particular luminance output of the second display device and based on the corresponding recovery map frames to obtain the derived frames; and, after the scaling, causing the derived frames to be displayed by the second display device as output frames that have a different dynamic range than the first frame. In some implementations, the method further includes determining a maximum luminance display capability of the second display device, wherein scaling the plurality of pixel luminances includes increasing luminances of highlights in the first video to a luminance level that is less than or equal to the maximum luminance display capability.

In some implementations, the second dynamic range is lower than the first dynamic range and the dynamic range of the derived frames is lower than the first dynamic range. In some implementations, the video container is readable to: display the first video by a first display device capable of displaying the first dynamic range; and display the derived video by a second display device only capable of displaying a dynamic range lower than the first dynamic range. In some implementations, obtaining the second video comprises performing range compression on the first video.

In some implementations, generating the recovery map track includes generating multiple recovery map tracks and providing the recovery map track in the video container includes providing the multiple recovery map tracks in the video container, wherein each of the multiple recovery map tracks encodes differences in luminances between portions of the first frame and corresponding portions of the corresponding second frame, and wherein each of the multiple recovery map tracks is readable from the video container to cause a respective derived video to be displayed, each respective derived video having one or more characteristics that differ from each other. In some implementations, the one or more characteristics of the respective derived videos that differ from each other include a dynamic range, wherein a greater dynamic range is provided from applying a first recovery map track of the multiple recovery map tracks, and a lower dynamic range is provided from applying a second recovery map track of the multiple recovery map tracks.

In some implementations, a computer-implemented method includes obtaining portions of a video container, the portions including: a first video including a plurality of first frames, wherein each of the first frames depicts a respective scene, the first frames having a first dynamic range; and a recovery map track that includes a plurality of recovery map frames, wherein each recovery map frame corresponds to a respective frame of the first frames. Each recovery map frame encodes luminance gains of pixels of the corresponding first frame that are scaled by an associated range scaling factor that includes a ratio of a maximum luminance of a corresponding second frame to a maximum luminance of the corresponding first frame, wherein the corresponding second frame depicts the respective scene of the first frame has a second dynamic range that is different than the first dynamic range. The method includes determining whether to display one of: the first video or a derived video that includes a plurality of derived frames having a dynamic range different than the first dynamic range, In response to determining to display the first video, the method includes causing at least a portion of the first video to be displayed by a display device; and, in response to determining to display the derived video, the method includes applying the gains of the recovery map frames of the recovery map track to luminances of pixels of the corresponding first frames to determine respective corresponding pixel values of corresponding derived frames of the derived video, and causing at least a portion of the derived video to be displayed by the display device.

Various implementations of the method are described. In some implementations, the video container includes a metadata track that includes respective range scaling factors that are associated with the recovery map frames of the recovery map track, wherein each of the respective range scaling factors is used to scale the luminance gains of pixels of the corresponding first frame, the luminance gains provided by the associated recovery map frame. In some implementations, the display device is capable of displaying a display dynamic range that is different than the first dynamic range, and applying the gains of the recovery map includes adapting the luminances of the pixel values of the corresponding derived frames to the display dynamic range of the display device. In some implementations, the dynamic range of the derived frames has a maximum luminance that is the lesser of: a maximum luminance of the display device, and a maximum luminance of the second dynamic range of the second frames used in generation of the recovery map frames.

In some implementations, in response to determining to display the derived video, applying the gains of the recovery map includes scaling the luminances of the first frames based on a particular luminance output of the display device and based on the corresponding recovery map frames. In some implementations, the scaling of the luminances of the first frames is performed based on: derived_frame(x, y) = first_frame(x, y) + log(display_factor) * recovery(x,y), wherein derived_frame(x,y) is a logarithmic space version of the corresponding derived frame, first_frame(x,y) is a logarithmic space version of the first frame recovered from the frame container, display_factor is a minimum of a range scaling factor and a maximum display luminance of the second display device, recovery(x,y) is the recovery map for pixel position (x, y) of the first frame, and the range scaling factor is a ratio of a maximum luminance of the corresponding second frame to a maximum luminance of the first frame.

In some implementations, each recovery map frame is encoded in a bilateral grid, and the method further includes decoding the recovery map frames from the bilateral grid. In some implementations, the second dynamic range is lower than the first dynamic range and the dynamic range of the derived frames is lower than the first dynamic range. In some implementations, the method further includes, in response to determining to display the derived video, decoding additional information from the video container, where the additional information includes the range scaling factor. In some implementations, the method further includes decoding the recovery map track from a block included in the frame container that is separate from the first video. In some implementations, determining whether to display one of the first video or the derived video is performed by a server device, and the determination is based on a display dynamic range of the display device that is included in or coupled to the client device; causing the at least the portion of the first video to be displayed by the display device includes streaming the first video from the server device to the client device such that the client device displays the first video; and causing at least a portion of the derived video to be displayed by the display device includes streaming the derived video from the server device to the client device such that the client device displays the derived video. In some implementations, obtaining the portions of the video container includes receiving the first video and the recovery map track by a client device from a server device; determining whether to display one of the first video or the derived video is performed by the client device, the determination based on a display dynamic range of the display device that is included in or coupled to the client device; causing the at least the portion of the first video to be displayed by the display device is performed by the client device; and applying the gains of the recovery map frames and causing at least a portion of the derived video to be displayed by the display device is performed by the client device.

In some implementations, a computer-implemented method includes obtaining a video container that includes: a first video including a plurality of first frames, wherein each of the first frames depicts a respective scene, the first frames having a first dynamic range; and a recovery map track that includes a plurality of recovery map frames, wherein each recovery map frame corresponds to a respective frame of the first frames. Each recovery map frame encodes luminance gains of pixels of the corresponding first frame that are scaled by a range scaling factor that includes a ratio of a maximum luminance of a corresponding second frame to a maximum luminance of the corresponding first frame, wherein the corresponding second frame depicts the respective scene of the first frame and has a second dynamic range that is different than the first dynamic range. The method includes determining to display a derived video that includes a plurality of derived frames having a dynamic range different than the first dynamic range; and, in response to determining to display the derived video, applying the gains of the recovery map frames of the recovery map track to luminances of pixels of the corresponding first frames to determine respective corresponding pixel values of corresponding derived frames of the derived video; an causing at least a portion of the derived video to be displayed by a display device.

In some implementations, a system includes a processor and a memory coupled to the processor, with instructions stored thereon that, when executed by the processor, cause the processor to perform operations. The operations include obtaining a video container that includes a first frame video including a plurality of first frames, the first frames having a first dynamic range; and a recovery map track that includes a plurality of recovery map frames, wherein each recovery map frame corresponds to a respective frame of the first frames, each recovery map frame encoding luminance gains of pixels of the corresponding first frame. The operations include determining whether to display one of: the first video or a derived video that includes a plurality of derived frames corresponding to the first frames in depicted subject matter and having a second dynamic range that is different than the first dynamic range. In response to determining to display the first video, at least a portion of the first video is caused to be displayed by a first display device. In response to determining to display the derived video, the method applies the gains of the recovery map frames of the recovery map track to luminances of pixels of the corresponding first frames to determine respective corresponding pixel values of corresponding derived frames of the derived video, and causes at least a portion of the derived video to be displayed by a second display device. Applying the gains includes scaling the luminances of the corresponding first frames based on a particular luminance output of the second display device and based on the recovery map frames.

In some implementations, a computer-implemented method includes obtaining a video container that includes: a first video including a plurality of first frames, wherein each of the first frames depicts a respective scene, the first frames having a first dynamic range; and a recovery map track that includes a plurality of recovery map frames, wherein each recovery map frame corresponds to a respective frame of the first frames, each recovery map frame encoding luminance gains of pixels of the corresponding first frame. The method includes determining to display a derived video that includes a plurality of derived frames corresponding to the first frames in depicted subject matter and having a second dynamic range that is different than the first dynamic range. In response to determining to display the derived video, the method applies the gains of the recovery map frames to luminances of pixels of the corresponding first frames to determine respective corresponding pixel values of corresponding derived frames of the derived video, and causes at least a portion of the derived video to be displayed by a display device. Applying the gains includes scaling the luminances of the first frame based on a particular luminance output of the second display device and based on the recovery map frames.

Some implementations may include a computing device that includes a processor and a memory coupled to the processor. The memory may have instructions stored thereon that, when executed by the processor, cause the processor to perform operations that include one or more of the operations and/or features of any of the methods described above.

Some implementations include a non-transitory computer-readable medium with instructions stored thereon that, when executed by a processor, cause the processor to perform operations that can be similar to operations and/or features of any of the methods, systems, and/or computing devices described above.

### BRIEF DESCRIPTION OF THE DRAWINGS

Fig. 1 is a block diagram of an example network environment which may be used for one or more implementations described herein.
Fig. 2 is a flow diagram illustrating an example method to encode a video in a backward-compatible high dynamic range video format, according to some implementations.
Fig. 3 is a flow diagram illustrating an example method to generate a recovery map track based on an HDR video and an LDR video, according to some implementations.
Fig. 4 is a flow diagram illustrating an example method to encode a recovery map into a bilateral grid, according to some implementations.
Fig. 5 is a flow diagram illustrating an example method to decode a video of a backward-compatible high dynamic range video format and display an HDR video, according to some implementations.
Fig. 6 is a diagrammatic illustration of an example video container that can be used to provide a backward-compatible high dynamic range video format, according to some implementations.
Figs. 7-10 are illustrations of example images representing a high dynamic range (Fig. 7) and a low dynamic range (Figs. 8-10), according to some implementations.
Fig. 11 is a block diagram of an example computing device which may be used to implement one or more features described herein.

### DETAILED DESCRIPTION

This disclosure relates to backward-compatible HDR video formats. The video formats provide a container from which both low dynamic range (LDR) and high dynamic range (HDR) videos can be obtained and displayed. The video formats can be used to display LDR versions of videos by LDR display devices, and can be used to display HDR versions of the videos by HDR display devices.

In some implementations, a video container is created that implements a video format. A video of lower dynamic range (e.g., an LDR video) and a corresponding video of greater (e.g., higher) dynamic range (e.g., an HDR video) are obtained. In some examples, the HDR video is captured by a camera, and the LDR video is created from the HDR video, e.g., using tone mapping or other process. The LDR video can be in a standard video format, e.g., using a standard video codec. A recovery map track is generated based on the HDR and LDR videos, that includes recovery map frames, each such frame encoding differences (e.g., gains) in luminances between portions (e.g., pixels or pixel values) of an associated frame of the LDR video and corresponding portions (e.g., pixels or pixel values) of a corresponding frame of the HDR video. In some implementations, the differences are scaled by a range scaling factor, associated with the recovery map frame, that includes a ratio of a maximum luminance of the frame of the HDR video to a maximum luminance of the corresponding frame of the LDR video. In some example implementations, each recovery map frame can be a scalar function that encodes the luminance gains in a logarithmic space, where recovery map values are proportional to the difference of logarithms of the luminances divided by a logarithm of the range scaling factor. In some implementations, the recovery map track can be encoded into a data structure or representation, wherein the encoding can reduce the storage space required to store the recovery map track. The recovery map track and the LDR video are provided in a video container that can be stored, for example, as a new HDR video format.

The video container can be read and processed by a device to display an output video that is the LDR video or is an output HDR video (e.g., a derived video). A device that is to read and display the video stored in the described video format may use an LDR display device (e.g., display screen) that can display LDR videos, e.g., it has a display dynamic range that can only display videos up to the low dynamic range of LDR videos, and cannot display greater dynamic ranges of HDR videos. For such an LDR display device, the device accesses the LDR video in the video container and ignores the recovery map track. Since the LDR video is in a standard format, the device can readily display the video. Thus, in some implementations, the LDR video may still be displayed by a device that does not implement code to detect or apply the recovery map track. If an accessing device can use a display device that is capable of displaying HDR videos (e.g., can display a greater luminance range in its output than the maximum luminance of LDR videos), the device accesses the LDR video and recovery map in the video container, and applies the luminance gains encoded in the recovery map to pixels of the LDR video to determine respective corresponding pixel values of an output HDR video that is to be displayed. In some examples, the device scales the pixel luminances of the LDR video based on a luminance output of the HDR display device (e.g., a maximum luminance output of the display device) and as well as the luminance gains stored in the recovery map. The output HDR video is displayed on the HDR display device with a high dynamic range. In some implementations, an HDR video and a recovery map track can be stored in the video container and the recovery map track can be applied to the HDR video to obtain an LDR video having a lower dynamic range, which has a high visual quality due to being locally tone mapped from the HDR video via the recovery map.

Described features provided several technical advantages, including enabling efficient storage and high quality display of videos with high dynamic range or videos with lower (e.g., standard) dynamic range by a wide range of devices and using a single video format. For example, a video format is provided that allows any device to display a video having a dynamic range appropriate to its display capability. Further, the videos displayed from these formats have no loss of visual quality (especially in their local contrast, e.g., detail) from converting from one dynamic range to another dynamic range. In various implementations, the output HDR video generated from the video container can be lossless, exact versions of the original HDR video that were used to create the video container, or the output HDR video can be a very similar version (visually) to the original HDR video, due to the recovery map storing the luminance information.

Described features can include using a recovery map to provide an output HDR video derived from an LDR video. The recovery map can include values based on a luminance gain ratio that is scaled by a range scaling factor, where the factor is a ratio of the maximum luminance of the original HDR video frame to the maximum luminance of the corresponding LDR video frame. For example, the recovery map indicates a relative amount to scale each pixel, and the range scaling factor indicates a specific amount of scaling to be performed, which provides context to the relative values in the recovery map (e.g., extending the range of the amount that pixels may be scaled for the particular image). The range scaling factor is advantageous in that it enables efficient, precise, and compact specification of recovery map values in a normalized range, which can then be efficiently adjusted for a particular output dynamic range using the range scaling factor. The use of the range scaling factor makes efficient use of all the bits used to store the recovery map, thus allowing encoding of a larger variety of videos accurately.

Furthermore, in some implementations or cases, when displaying the output HDR video, the pixel luminances of the LDR video frames are also scaled based on a display factor. The display factor can be based on a luminance output of the HDR display device that is to display the output video. This allows an HDR video having any arbitrary dynamic range above LDR to be generated from the container based on the display capability of the display device. The dynamic range of the output HDR video is not constrained to any standard high dynamic range nor to the dynamic range of the original HDR video. Because HDR display devices may vary considerably as to how bright they can display images, a benefit of this feature is that an video can be displayed with a quality rendition on display devices of any dynamic range. Furthermore, described features allow changes in dynamic range (e.g., above LDR) in the output HDR video in real time based on user input or other conditions, e.g., to reduce viewing strain or fatigue in a user or for other applications. The display scaling allows an output HDR video to have an arbitrary dynamic range above the range of the LDR video.

In contrast, prior techniques may encode an HDR image for a display with a specific and fixed dynamic range or maximum brightness. Such a technique cannot take advantage of an HDR display device that has a greater dynamic range or brightness than the encoded dynamic range. In addition, such prior techniques may produce a lower quality image if the HDR display device is not capable of displaying as high a dynamic range as encoded in the original HDR image; for example, techniques such as rolloff curves may be required to reduce the dynamic range of the HDR image to display on the HDR display device, which, for example, often reduces local contrast in the image in undesirable ways, reducing the visual quality of the image.

Further in contrast, prior HDR video techniques may require specialized hardware to decode data provided in certain formats. Devices that lack the requisite hardware may not be able to decode the video at all without the use of specialized software that may be sub-performant. Also, some devices may lack displays that can render the content in HDR. Furthermore, HDR videos typically require tone-mapping to convert the videos into lower dynamic range (e.g., standard dynamic range, SDR), a common use case for supporting legacy software that is not designed to work with HDR content, or for displaying videos on displays that do not support HDR content well, a common use case. Existing HDR to LDR conversion techniques may not preserve all of the desired artistic intent in video, since such transformations take the form of a single global tone mapping, and therefore lack the necessary information to do so reliably for a variety of content. For example, the Hybrid-log Gamma (HLG) transfer function, which is designed to be somewhat backwards-compatible, in practice may cause noticeable degradation when rendered by 10-bit HDR hardware decoders and displayed in an 8-bit SDR environment. Also, both HLG and Perceptual Quantizer (PQ) transfer functions provide global tone-mapping and do not take into account lighting differences across a particular scene. Some formats may have limitations in capturing local tone-mapping differences within a frame. As a result, parts of a scene may better take advantage of the high dynamic range than others, which can result in a loss of detail or fidelity.

Described features provide shareable, backwards-compatible mechanisms to create and render videos that contain high dynamic range (HDR) content, beyond formats such as 10-bit HDR. Described video formats can enable the next generation of consumer HDR content, and also allow supporting professional video workflows, in some implementations without the need for specialized hardware codecs for decoding/encoding. Also, one or more described implementations of HDR formats address issues with current HDR transfer functions such as HLG and PQ that assume a global tone-mapping. In contrast, described features enable local tone-mapping, which is better at preserving details in scenes with varying levels of brightness. Thus, the described HDR format can produce higher fidelity and quality HDR rendered content compared with traditional HDR formats.

In addition, described features allow the video format to have low storage requirements. For example, the described video format allows a single LDR video to be stored with a recovery map track that has low storage requirements, thus saving considerable storage space over a format that stores multiple videos. For example, some implementations include compressing the recovery map track, and in some of these examples, the recovery map track can be encoded into a bilateral grid. Such a grid can store the recovery map track with a significant reduction in required storage space, and allows an output HDR video to be provided from the recovery map track with almost no loss in visual quality compared to the original HDR video.

A technical effect of one or more described implementations is that devices can display videos having a dynamic range that better corresponds to the dynamic range of a particular output display device that is being used to display the videos, as compared to prior systems. For example, such a prior system may provide a video that does not have a dynamic range that corresponds to the dynamic range of a display device, resulting in poorer video display quality. Features described herein can reduce such disadvantages by, e.g., providing a recovery map track in the video format, and/or scaling video output, to set the dynamic range of a video to better suit a particular display device. Furthermore, a technical effect of one or more described implementations is that devices expend fewer computational resources to obtain results. For example, a technical effect of described techniques is a reduction in the consumption of system processing resources and/or storage resources as compared to prior systems that do not provide one or more of the described techniques or features. For example, a prior system may require a full LDR video and a full HDR video to be stored and/or provided in order to display a video that has an appropriate dynamic range for a particular display device, which requires additional storage and communication bandwidth resources in comparison to described techniques. In another example, a prior system may only store an HDR video, and then rely on tone-mapping the HDR video to a lower dynamic range for LDR display; such tone mapping may reduce visual quality in representing the HDR video on a LDR display for a large variety of HDR videos.

As referred to herein, dynamic range relates to a ratio between the brightest and darkest parts of a scene. The dynamic range of LDR formats typically does not exceed a particular low range, such as a standard dynamic range (SDR) file in a low range color space/color profile. Similarly, the displayed dynamic range output of LDR display devices is low. As referred to herein, an image with dynamic range greater (or higher) than an LDR image (e.g., JPEG) or LDR video is considered an HDR image or HDR video, and a display device capable of displaying that greater dynamic range is considered an HDR display device. An HDR image or HDR video can store pixel values that span a greater tonal range than LDR. In some examples, an HDR image or HDR video can more accurately display the dynamic range of a real-world scene, and/or may have a lower dynamic range that is greater than the dynamic range of an LDR image or LDR video (e.g., HDR images and videos may commonly have greater than 8 bits per color channel).

The use of "log" in this description refers to a particular base of logarithm, and can be any base number, e.g., all logs herein can be base 2, or base 10, etc.

Further to the descriptions herein, a user may be provided with controls allowing the user to make an election as to both if and when systems, programs, or features described herein may enable collection of user information (e.g., images from a user's library, social network, social actions, or activities, profession, a user's preferences, a user's current location, a user's messages, or characteristics of a user's device), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

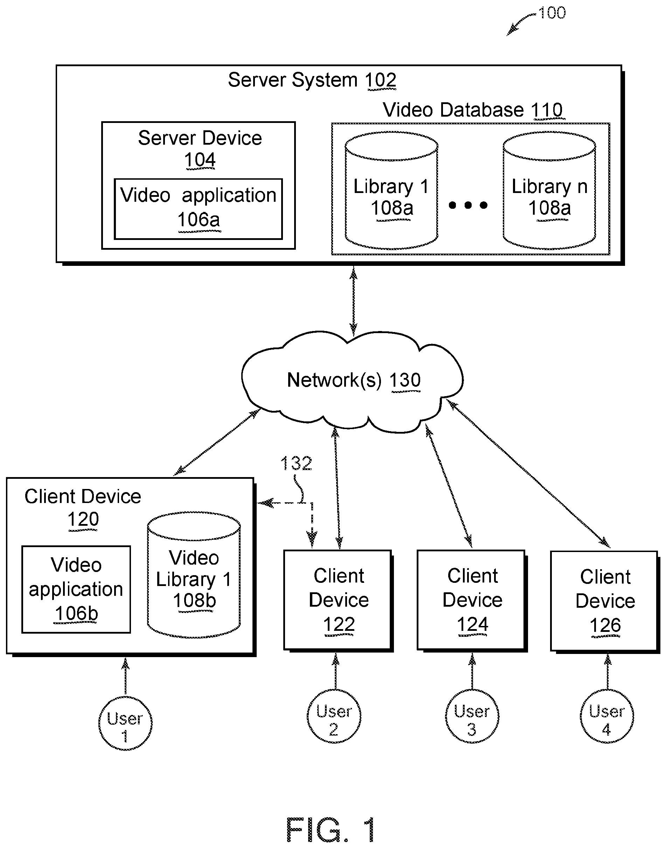

Fig. 1 illustrates a block diagram of an example network environment 100, which may be used in some implementations described herein. In some implementations, network environment 100 includes one or more server systems, e.g., server system 102 in the example of Fig. 1, and a plurality of client devices, e.g., client devices 120-126, each associated with a respective user of users U1-U4. Each of server system 102 and client devices 120-126 may be configured to communicate with a network 130.

Server system 102 can include a server device 104 and a video database 110. In some implementations, server device 104 may provide video application 106a. In Fig. 1 and the remaining figures, a letter after a reference number, e.g., "106a," represents a reference to the element having that particular reference number. A reference number in the text without a following letter, e.g., "106," represents a general reference to embodiments of the element bearing that reference number.

Video database 110 may be stored on a storage device that is part of server system 102. In some implementations, video database 110 may be implemented using a relational database, a key-value structure, or other type of database structure. In some implementations, video database 110 may include a plurality of partitions, each corresponding to a respective video library for each of users 1-4. For example, as seen in Fig. 1, video database 110 may include a first video library (library 1, 108a) for user 1, and other video libraries (library 2, ..., library n) for various other users. While Fig. 1 shows a single video database 110, it may be understood that video database 110 may be implemented as a distributed database, e.g., over a plurality of database servers. Further, while Fig. 1 shows a plurality of partitions, one for each user, in some implementations, each video library may be implemented as a separate database.

Video library 108a may store a plurality of videos associated with user 1, metadata associated with the plurality of images, and one or more other database fields, stored in association with the plurality of videos. Access permissions for video library 108a may be restricted such that user 1 can control how videos and other data in video library 108a may be accessed, e.g., by video application 106, by other applications, and/or by one or more other users. Server system 102 may be configured to implement the access permissions, such that video data of a particular user is accessible only as permitted by the user.

A video as referred to herein can include multiple digital frames (images that are included in a video) having pixels with one or more pixel values (e.g., color values, brightness values, etc.). A video can be a sequence of images or frames that may optionally include audio), or can be a dynamic image (e.g., animations, animated GIFs, cinemagraphs where a portion of the image includes motion while other portions are static, etc.), etc. An video as used herein may be understood as any of the above. In some implementations, a video can include a single image or frame.

Network environment 100 can include one or more client devices, e.g., client devices 120, 122, 124, and 126, which may communicate with each other and/or with server system 102 via network 130. Network 130 can be any type of communication network, including one or more of the Internet, local area networks (LAN), wireless networks, switch or hub connections, etc. In some implementations, network 130 can include peer-to-peer communication between devices, e.g., using peer-to-peer wireless protocols (e.g., Bluetooth^{®}, Wi-Fi Direct, etc.), etc. One example of peer-to-peer communication between two client devices 120 and 122 is shown by arrow 132.

In various implementations, users 1, 2, 3, and 4 may communicate with server system 102 and/or each other using respective client devices 120, 122, 124, and 126. In some examples, users 1, 2, 3, and 4 may interact with each other via applications running on respective client devices and/or server system 102 and/or via a network service, e.g., a social network service or other type of network service, implemented on server system 102. For example, respective client devices 120, 122, 124, and 126 may communicate data to and from one or more server systems, e.g., server system 102.

In some implementations, the server system 102 may provide appropriate data to the client devices such that each client device can receive communicated content or shared content uploaded to the server system 102 and/or a network service. In some examples, users 1-4 can interact via image/video sharing, audio or video conferencing, audio, video, or text chat, or other communication modes or applications.

A network service implemented by server system 102 can include a system allowing users to perform a variety of communications, form links and associations, upload and post shared content such as images, videos, text, audio, and other types of content, and/or perform other functions. For example, a client device can display received data such as content posts sent or streamed to the client device and originating from a different client device via a server and/or network service (or from the different client device directly), or originating from a server system and/or network service. In some implementations, client devices can communicate directly with each other, e.g., using peer-to-peer communications between client devices as described above. In some implementations, a "user" can include one or more programs or virtual entities, as well as persons that interface with the system or network.

In some implementations, any of client devices 120, 122, 124, and/or 126 can provide one or more applications. For example, as shown in Fig. 1, client device 120 may provide video application 106b. Client devices 122-126 may also provide similar applications. Video application 106a may be implemented using hardware and/or software of client device 120. In different implementations, video application 106a may be a standalone client application, e.g., executed on any of client devices 120-124, or may work in conjunction with video application 106b provided on server system 102.

Video application 106 may provide various features, implemented with user permission, that are related to videos (and images). For example, such features may include one or more of capturing videos using a camera, modifying the videos, determining image/video quality (e.g., based on factors such as face size, blurriness, number of faces, image composition, lighting, exposure, etc.), storing videos in an video library 108, encoding and decoding images and videos into any of various image and video formats (including formats described herein), providing user interfaces to view displayed videos or other image-based creations or compilations, etc.

Client device 120 may include an video library 108b of user 1, which may be a standalone video library. In some implementations, video library 108b may be usable in combination with video library 108a on server system 102. For example, with user permission, video library 108a and video library 108b may be synchronized via network 130. In some implementations, video library 108 may include a plurality of videos associated with user 1, e.g., videos captured by the user (e.g., using a camera of client device 120, or other device), videos shared with the user 1 (e.g., from respective video libraries of other users 2-4), videos downloaded by the user 1 (e.g., from websites, from messaging applications, etc.), screenshots, and other videos or images. In some implementations, video library 108b on client device 120 may include a subset of videos in video library 108a on server system 102. For example, such implementations may be advantageous when a limited amount of storage space is available on client device 120.

In various implementations, client device 120 and/or server system 102 may include other applications (not shown) that may be applications that provide various types of functionality. A user interface on a client device 120, 122, 124, and/or 126 can enable the display of user content and other content, including images, videos, image-based creations, data, and other content as well as communications, privacy settings, notifications, and other data. Such a user interface can be displayed using software on the client device, software on the server device, and/or a combination of client software and server software executing on server device 104, e.g., application software or client software in communication with server system 102. The user interface can be displayed by a display device of a client device or server device, e.g., a touchscreen or other display screen, projector, etc. In some implementations, application programs running on a server system can communicate with a client device to receive user input at the client device and to output data such as visual data, audio data, etc. at the client device.

For ease of illustration, Fig. 1 shows one block for server system 102, server device 104, video database 110, and shows four blocks for client devices 120, 122, 124, and 126. Server blocks 102, 104, and 110 may represent multiple systems, server devices, and network databases, and the blocks can be provided in different configurations than shown. For example, server system 102 can represent multiple server systems that can communicate with other server systems via the network 130. In some implementations, server system 102 can include cloud hosting servers, for example. In some examples, video database 110 may be stored on storage devices provided in server system block(s) that are separate from server device 104 and can communicate with server device 104 and other server systems via network 130.

Also, there may be any number of client devices. Each client device can be any type of electronic device, e.g., desktop computer, laptop computer, portable or mobile device, cell phone, smartphone, tablet computer, television, TV set top box or entertainment device, wearable devices (e.g., display glasses or goggles, wristwatch, headset, armband, jewelry, etc.), personal digital assistant (PDA), media player, game device, etc. In some implementations, network environment 100 may not have all of the components shown and/or may have other elements including other types of elements instead of, or in addition to, those described herein.

Other implementations of features described herein can use any type of system and/or service. For example, other networked services (e.g., connected to the Internet) can be used instead of or in addition to a social networking service. Any type of electronic device can make use of features described herein. Some implementations can provide one or more features described herein on one or more client or server devices disconnected from or intermittently connected to computer networks. In some examples, a client device including or connected to a display device can display content posts stored on storage devices local to the client device, e.g., received previously over communication networks.

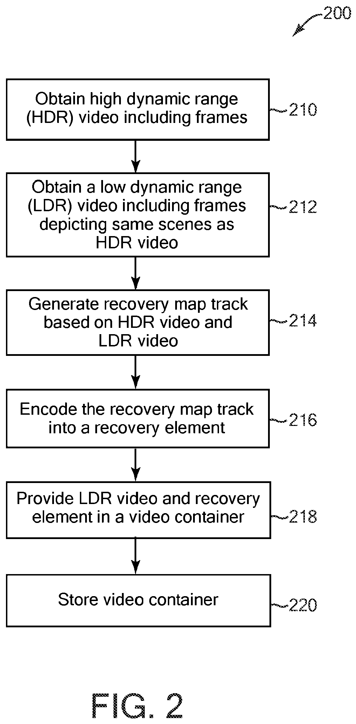

Fig. 2 is a flow diagram illustrating an example method 200 to encode a video in a backward-compatible high dynamic range video format, e.g., an HDR video format that has low dynamic range (LDR) compatibility, according to some implementations. In some implementations, method 200 can be performed, for example, on a server system 102 as shown in Fig. 1. In some implementations, some or all of the method 200 can be implemented on one or more client devices such as client devices 120, 122, 124, or 126 of Fig. 1, one or more server devices such as server device 104 of Fig. 1, and/or on both server device(s) and client device(s). In described examples, the implementing system includes one or more digital processors or processing circuitry ("processors"), and one or more storage devices (e.g., a database or other storage). In some implementations, different components of one or more servers and/or clients can perform different blocks or other parts of the method 200. In some examples, a device is described as performing blocks of method 200. Some implementations can have one or more blocks of method 200 performed by one or more other devices (e.g., other client devices or server devices) that can send results or data to the first device.

Various types of devices can encode the video data and/or generate the recovery map data and video container described in method 200. For example, in various implementations, a camera on a mobile device, a server device in the cloud or over a network (e.g., after receiving a video stream from a camera or other image/video capture device), a desktop computer, dedicated video hardware in a device, software implemented by a CPU or GPU, etc. can perform such encoding and generation.

In some implementations, the method 200, or portions of the method, can be initiated automatically by a system. For example, the method (or portions thereof) can be performed periodically, or can be performed based on one or more particular events or conditions, e.g., a client device launching video application 106, capture of new video by an image capture device of a client device, reception of videos over a network by a device, upload of new videos to a server system 102, a predetermined time period having expired since the last performance of method 200, and/or one or more other conditions occurring which can be specified in settings read by the method.

User permissions can be obtained to use user data in method 200 (blocks 210-220). For example, user data for which permission is obtained can include images or videos stored on a client device (e.g., any of client devices 120-126) and/or a server device, image/video metadata, user data related to the use of an video application, other image-based creations, etc. The user is provided with options to selectively provide permission to access all, any subset, or none of user data. If user permission is insufficient for particular user data, method 200 can be performed without use of that of user data, e.g., using other data (e.g., images or videos not having an association with the user).

Method 200 may begin at block 210. In block 210, a high dynamic range (HDR) video is obtained by the device (an "original HDR video"). The HDR video includes multiple frames, each frame depicting a respective scene. Each frame can be considered an image in this disclosure. In some implementations, the HDR video is provided in any of multiple standard formats for high dynamic range videos. Some example HDR standards are HDR 10, HDR10+, Dolby Vision, Hybrid Log-Gamma (HLG), etc. In some examples, the HDR video can be captured by an image capture device, e.g., a camera of a client device or other device. In additional examples, the HDR video is received over a network from a different device, or obtained from storage accessible by the device. In some implementations, the HDR video can be generated based on any of multiple image or video generation techniques, e.g., ray tracing, etc. In some implementations, the HDR video may be compressed, e.g., may have independently coded frames and frames that are predicted based on other frames, such that not all complete frames that will be displayed from the video need to be stored in an independently-decodable way. The techniques herein can optionally be used in combination with a video encoding/decoding scheme, e.g., a recovery map frame can be generated from a raw video frame or a decoded video frame.

In block 212, a low dynamic range (LDR) video is obtained by the device (e.g., an "original LDR video"). The LDR video includes multiple frames that depict the same scenes and/or subject matter as corresponding frames of the HDR video, e.g., the frames of the LDR video correspond to the frames of the HDR video in depicted subject matter (and/or the LDR frames can have the same placement or index from the beginning of the video as corresponding HDR frames). Each frame can be considered an image in this disclosure. The LDR video frames have a lower dynamic range than the HDR video frames. In some implementations, the LDR video frames can have a dynamic range of a standard LDR video format, or can have any dynamic range that is lower than the HDR video frames. For example, the LDR video can be provided in a standard video format, e.g., encoded at 8-bit or greater bit depths, having a Rec. 709 / sRGB gamut, encoded as HEVC at 8-bits or 10 bits, VP8/VP9/AV1 at 8 bits or 10 bits, etc. In some examples, the LDR video has a dynamic range that is provided in 8 bits per pixel per channel, and the HDR video has a dynamic range above the dynamic range of the LDR video (e.g., commonly a bit depth that is 10 bits or greater, a wide-gamut color space, and HDR-oriented transfer functions). In some implementations, the LDR video may be compressed, e.g., may have independently coded frames and frames that are predicted based on other frames, such that not all complete frames that will be displayed from the video need to be stored in an independently-decodable way. The techniques herein can optionally be used in combination with a video encoding/decoding scheme, e.g., a recovery map frame can be generated from either a raw video frame or a decoded video frame.

In various implementations, the HDR video of block 210 can be obtained before or can be obtained after the LDR video is obtained. For example, in some implementations, HDR video is obtained, and the LDR video is derived from the HDR video. In some examples, the LDR video can be generated based on the HDR video using local tone mapping or other process. Local tone mapping, for example, changes each pixel (or pixel region) according to its local features of an image frame (not according to a global tone mapping function that changes all pixels the same way). Any of a variety of local tone mapping techniques can be used to reduce tonal values within an HDR frame to be appropriate for the corresponding LDR frame having a lower dynamic range. For example, local Laplacian filtering can be used in the tone mapping process, and/or other techniques can be used. In some implementations, a different global tone-curve (or digital gain) can be used in different areas of the frame. In some implementations, different tone mapping techniques can be used for different types of image data, e.g., different techniques for still images and for video images. In other examples, exposure fusion techniques can be used to produce the LDR frame from the corresponding HDR frame and/or from multiple captured or generated frames, e.g., combining portions of multiple frames captured or synthetically generated at different exposure levels, into a combined LDR frame. In some example implementations, a combination of tone mapping and exposure fusion techniques can be used to produce each LDR frame (e.g., use Laplacian tone mapping pyramids from different frames having different exposure levels, provide a weighted blend of the pyramids, and collapse the blended pyramid).

In other examples, the LDR video can be obtained from other sources. For example, the HDR video can be captured by a camera device and the LDR video can be captured by the same camera device, e.g., before or after, or at least partially simultaneously with, the capture of the HDR video. In some examples, the camera device can capture the HDR video and LDR video based on camera settings, e.g., with dynamic ranges indicated in the camera settings or user-selected settings. In some implementations, each captured video frame can be processed to provide an SDR output frame for the SDR video and an HDR output frame for the HDR video. Block 212 may be followed by block 214.

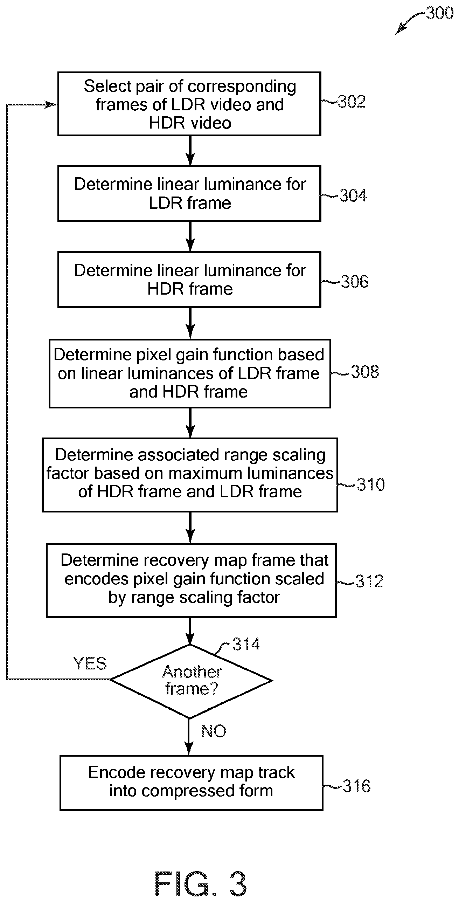

In block 214, a recovery map track is generated based on the HDR video and the LDR video. The recovery map track includes a sequence of multiple recovery map frames, e.g., the track can be considered a video. Each recovery map frame encodes differences in luminances between portions (e.g., pixels) of a respective HDR video frame and corresponding portions (e.g., pixels) of a corresponding LDR video frame. Thus, there can be a respective recovery map frame in the recovery map track that is associated with each frame of the HDR video and LDR video, where the frames of the HDR video and LDR video correspond to each other (e.g., depict the same scene or subject matter). In other words, each recovery map frame is associated with a pair of corresponding frames of the HDR video and the LDR video (e.g., recovery map frame 1 is associated with HDR frame 1 and LDR frame 1, recovery map frame 2 is associated with HDR frame 2 and LDR frame 2, etc.). Each recovery map frame is to be used to convert luminances of an associated LDR video frame into luminances of the corresponding HDR video frame. For example, respective luminance gains and a respective range scaling factor can be encoded in each recovery map frame (and/or the range scaling factors can be included in a separate metadata track as described below), so that applying the luminance gains to luminance values of individual pixels of the associated LDR frame results in pixels that are the same (or similar, e.g., approximately the same) as corresponding pixels of the corresponding HDR frame. Examples of generating a recovery map track are described in greater detail below with reference to Fig. 3. Block 214 may be followed by block 216.

In block 216, the recovery map track can be encoded into a recovery element. In various implementations, the recovery element can be a track, data structure, algorithm, neural network, etc. that includes or provides the recovery map information for the recovery map frames. For example, the recovery element can be a track that is compressed into a standard format in which the frames have the same aspect ratio as an aspect ratio of the frames of the LDR video. The frames of the recovery element can have any resolution, e.g., the same or a different resolution than the resolution of the LDR video. For example, the recovery element can have a smaller resolution than the LDR video, e.g., one quarter the resolution of the LDR image. In some examples, the recovery map track can be encoded using H.264/AVC, H.265/HEVC, VP9, AV1, or other video codecs.

In some examples, the recovery map track can be encoded as 8-bit video. In various implementations, the recovery map track can be encoded with a single channel or with multiple channels (e.g., RGB channels). In some examples, the values of each recovery map frame can be encoded as 8-bit unsigned integer values, where each value represents a recovery value and is stored in one pixel of the recovery map frame. In some example implementations, the encoding can result in a continuous representation from (value between) -2.0 to 2.0 that can be compressed, e.g., compressed via H.264/AVC, H.265/HEVC, VP9, AV1, or other codecs. In some implementations, the encoding can include 1 bit to indicate if the map value is positive or negative and the rest of the bits interpreted as the magnitude of the value in the range of recovery map values (e.g., -1 to +1). In some implementations, such as this example, the magnitude representation can exceed 1.0 and -1.0, since some pixels may require greater attenuation or gain than represented by the associated range scaling factor to accurately recover or represent the original HDR video luminance range.

In single-channel encoding, the channel can specify an adjustment to make to a target frame based on luminance (brightness). Thus, chromaticity or hue of the target frame is not changed by the application of the associated recovery map to that frame. Single channel encoding can preserve existing chromaticity or hue of the target frame (e.g., preserve RGB ratios), and typically requires less storage space than multi-channel encoding. In some implementations, the recovery element can be encoded as multi-channel values. Multi-channel encoding can allow adjustment of the colors (e.g., chromaticity or hue) of the target frame during the application of the recovery map to the target frame. Multi-channel encoding can compensate for loss of colors that may have occurred in the LDR frame, e.g., rolloff of color at high brightness. This can allow recovery of HDR luminance as well as correct color (for example, instead of only increasing the brightness that causes a sky to look white, also resaturating the sky to a blue hue). In some implementations, a multi-channel encoded recovery map can be used to recover a wider color gamut (or compensate for a loss of color gamut) in the target frame. For example, an ITU-R Recommendation BT.2020 gamut can be recovered from a standard RGB (sRGB)/BT.709 gamut LDR video.

In some implementations, a different bit-depth, e.g., a bit-depth greater than 8-bit, can be used for the recovery map values of the recovery map frames. For example, in some implementations, 8-bit depth may be a minimum bit-depth to allow for HDR representation in combination with an 8-bit single channel gain map, where a lower bit depth may not provide enough information to provide HDR video content without artifacts such as banding. In some implementations, the recovery element can be encoded as floating point values. In some implementations, the recovery element can be a data structure, algorithm, neural network, etc. that encodes the values of the recovery map frames. For example, the recovery map track can be encoded in weights of a neural network that is used as the recovery element. Block 216 may be followed by block 218.

In block 218, the LDR video and the recovery element are provided in a video container that can be stored as a new HDR video format. In some implementations, the LDR video can be considered a base video in the image container. The video container can be read by a device to display the LDR video or a corresponding HDR video generated based on the LDR video and recovery element. In some implementations, the video container can be a standard video container, e.g., an ISOBMFF / MP4 file, container of WebM, Matroska, etc.

In some implementations, the recovery map track can be quantized into a precision of the video container into which the recovery map track is to be placed. For example, in some implementations in which the LDR video frames are encoded in a video encoding format in which 8-bit unsigned integer values are used, the values of the recovery map frames can be quantized into an 8-bit format for storage. In some examples, each value can represent a recovery value and is stored in one pixel of a recovery map frame. In some examples, each encoded value can be defined as: $encode \left(x, y\right) = recovery \left(x, y\right) * 63.75 + 127.5$ This encoding results in a representation in a range from -2.0 to 2.0, with each value quantized to one of the 256 possible encoded values, for example. Other ranges and quantizations can be used in other implementations, e.g., -1.0 to 1.0 or other ranges.

The video container can include additional information that relates to the display of an output HDR video that is based on the contents of the video container. For example, the additional information can include metadata that is provided in the video container, in the recovery element, and/or in the LDR video. Metadata can encode information about how to present the LDR video, and/or an HDR video derived therefrom, on a display device. Such metadata can include, for example, the version of recovery map format used in the container, the range scaling factor(s) used in the recovery map track, a storage method (e.g., whether the recovery map track is encoded in a bilateral grid or other data structure, or is otherwise compressed by a specified compression technique), resolution of the recovery map track, guide weights for bilateral grid storage, and/or other recovery map properties or image/ video properties.

In some examples, the LDR video can include metadata, e.g., a metadata data structure or directory, that defines the order and properties of the items (e.g., files) in the video container, and each file in the container can have a corresponding media item in the data structure. The media item can describe the location of the associated file in the video container and basic properties of the associated file. For example, a container element can be encoded into metadata of the LDR video, where the element defines the format version and a data structure or directory of media items in the container. In some examples, metadata is stored according to a data model that allows the LDR video to be read by devices or applications that do not support the metadata and cannot read it. In some examples, some metadata can be stored in the video container as a timed metadata track (e.g., video) that includes frames corresponding to the frames of the recovery map track. Some examples of a video container that can be used are described below with reference to Fig. 13. Block 218 may be followed by block 220.

In block 220, the video container can be stored, e.g., in storage for access by one or more devices. For example, the video container can be sent to one or more server systems over a network to be made accessible to multiple client devices that can access the server systems.

In some implementations, a server device can save the video container in cloud storage (or other storage) that includes the additional information such as metadata. The server can store the LDR video in any format in the container. In response to the server device receiving a request for the video from a client device, the server device can determine particular video data (e.g., which video stream, LDR or HDR) to serve to the requesting client device based on system settings, user preferences, characteristics of the client device such as type of client device (e.g., mobile client device, desktop computer client device), display device characteristics of the client device such as dynamic range, resolution, etc. For example, for some client devices, the server device can serve the video container to the client device, and the client device can decode the video container to obtain a video to display (base video or derived video) in the appropriate dynamic range for the client's display device. In some implementations, the server device can extract and decode video data (and recovery map track, if needed) from the video container, produce a single output video stream (e.g., a base video stream or derived video stream) according to techniques described herein (e.g., as in Fig,. 5), and serve the single determined video stream to the client device.

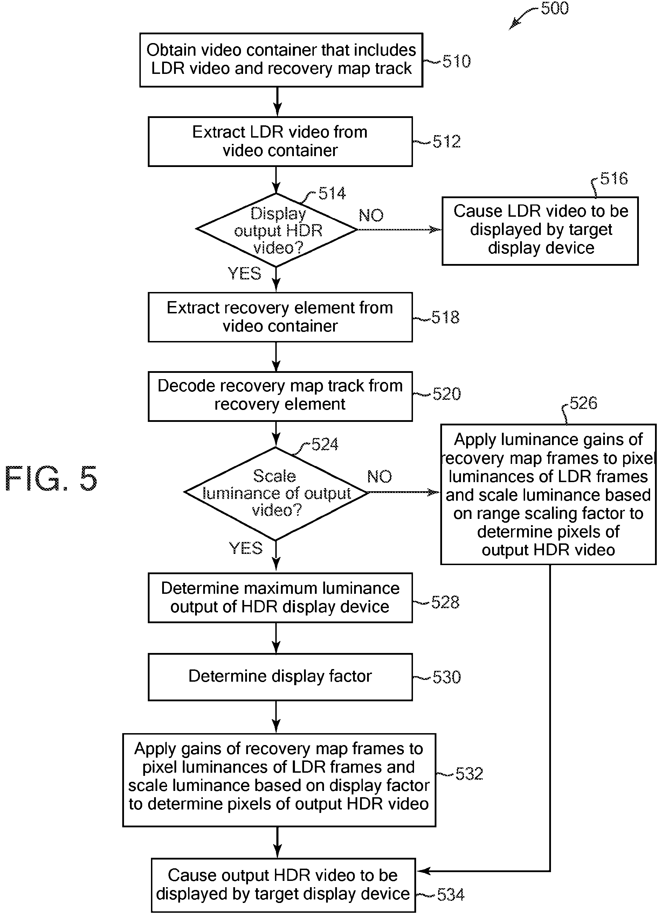

In some implementations (e.g., for some types of client devices), the server device can serve multiple video streams to the client device from the video container stored at the server, including the base video stream and the recovery map track (and timed metadata track, in some implementations). In some implementations or cases, e.g., if the base video stream is LDR, the client device can determine if it is capable of displaying high dynamic range for an HDR video and if so, can utilize the streams at the client device to create a derived output HDR video as described with reference to Fig. 5. In some implementations, the client device can apply the recovery map track to the base video and create the derived output video using its processing hardware, such as a CPU, GPU, or other processor. In some implementations, the client device can include a video decoder, e.g., a hardware video decoder, that can efficiently apply the recovery map track to the base video stream and provide the derived output video for display by the client device.

In some implementations, e.g., for some types of client devices for which the server device has information describing client device characteristics (such as dynamic range of the display device of the client device), the server device can similarly serve the multiple video streams to the client device (for client device processing, as above) if the server device has determined that the client device has a display device that has appropriate dynamic range to display an output video produced by the two streams. If the server device determines that the client device does not have such an appropriate display device, the server device can serve a single video stream to the client device, e.g., an LDR video stream that is the base video data in the video container (or, in some implementations, an LDR video stream produced by the server from a base HDR video stream in the video container, e.g., using the recovery map track in the video container, a tone mapping technique, etc.).

In some implementations, the client device can receive the video container from the server device or other device or source, and can locally provide an appropriate output video for display from the video container using techniques described herein (e.g. with reference to Fig. 5). For example, based on the dynamic range of its display device, the client device outputs the output video as the base video in the container or as a derived video produced by applying a recovery map track in the container to the base video.

In some implementations, multiple recovery map tracks (e.g., recovery elements) can be included in the video container. Each recovery map track can include different values to provide one or more different characteristics to an output video that is based on that recovery map track as described herein. For example, a particular one of the multiple recovery map tracks can be selected and applied to provide an output video having characteristics based on the selected recovery map track, where the output video may be more suited to a particular use or application than the other recovery map track(s) in the video container. For example, some or all of the multiple recovery map tracks can be associated with particular and different display device characteristics of a target output display device. In some examples, a user (or device settings) may use different recovery map tracks to display SDR video or HDR video on display devices with different dynamic ranges (e.g., different peak brightnesses) or different color gamuts, or when using different video decoders.

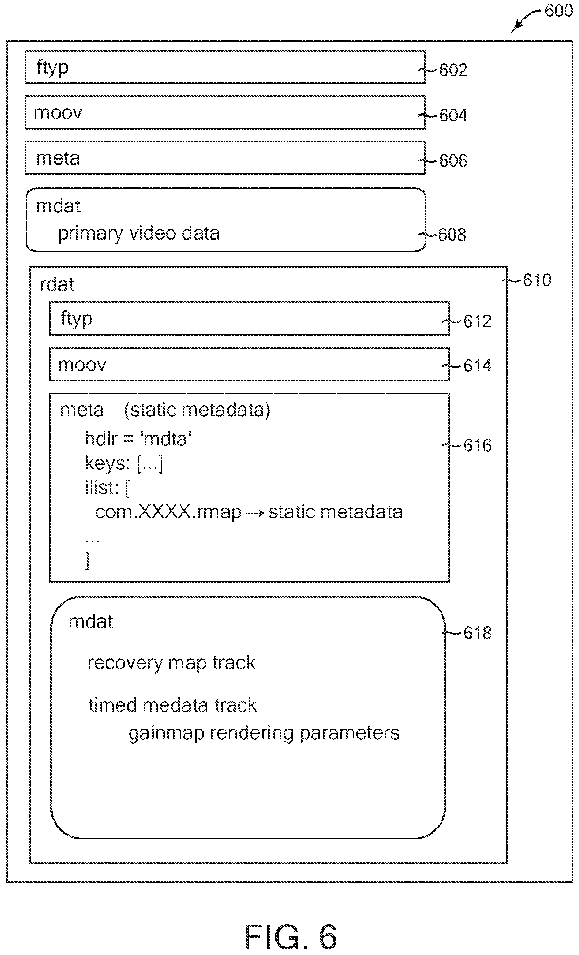

In some implementations, a respective set of associated range scaling factors (e.g., a respective timed metadata track as in Fig. 6) can be stored in the container for each of these recovery map tracks. In some implementations, one or more of the recovery map tracks can be associated with stored indications of particular display device characteristics of a target display device, as described below with respect to Fig. 5, to enable selection of one of the recovery map tracks based on a particular target display device being used for display. In some implementations, a single range scaling factor can be used with multiple recovery maps, e.g., a single range scaling factor for all the frames in the LDR video and SDR video (as described below with reference to block 310 of Fig. 3), and/or a single set of range scaling factors can be used with multiple recovery map tracks.

In some implementations, additional metadata can be stored in the video container that indicates an intended usage of the recovery map track. In some implementations that store multiple recovery map tracks in the video container, such metadata can include indications of intended usage for each of multiple recovery map tracks. For example, if recovery map track 1 is intended for mapping to LDR video, then a map, table, or index with a key of track 1 can indicate a value that is a list of specified output formats associated with the recovery map. In some examples, the metadata can specify an indication of an output range (e.g., "LDR" or "HDR," or HDR can be specified as a multiplier of LDR range). In some examples, the metadata can specify a bit depth, e.g., "output metadata: bit_depth X," where X can be 8, 10, 12, etc. In some implementations, the specified bit_depth can be a minimum bit depth, e.g., "LDR" can indicate 8-bit minimum for output via opto-electronic transfer function (OETF) and 12-bit minimum for linear/extended range output; and "HDR" can indicate 10-bit minimum for output via OETF and 16-bit minimum for linear/extended range output. This type of metadata can also be used for multi-channel recovery maps, where the color space can change and the metadata can include an indication of the intended output color space. For example, the metadata can be specified as "output metadata: bit_depth X, color_space," where color_space can be, e.g., Rec. 709, Rec. 2020, etc. In some implementations, for single-channel recovery map tracks, the output color space can be the same as the primary (base) video.

Fig. 3 is a flow diagram illustrating an example method 300 to generate a recovery map track based on an HDR video and an LDR video, according to some implementations. For example, method 300 can be implemented for block 214 of method 200 of Fig. 2, or can be performed in other implementations. In some implementations, an LDR video and (original) HDR video can be obtained as described with reference to Fig. 2.

Method 300 may begin at block 302, in which a pair of corresponding frames of the LDR video and the HDR video are selected for processing. For example, the corresponding frames can depict the same scene or subject matter, and/or can have the same placement or index from the beginning of the videos. Block 302 may be followed by block 304.

In block 304, a linear luminance can be determined for the selected LDR frame. In some implementations, the original LDR frame (e.g., obtained in the LDR video in block 212 of Fig. 2) can be a non-linear or gamma-encoded frame, and a linear version of the LDR frame can be generated, e.g., by transforming the primary image color space of the non-linear LDR frame to a linear version. For example, a color space with a standard RGB (sRGB) transfer function is transformed to a linear color space that preserves the sRGB color primaries.

A linear luminance can be determined for the linear LDR frame. For example, a luminance (Y) function can be defined as: ${Y}_{ldr} \left(x, y\right) = primary_color_profile_to_luminance \left(LDR\left(x, y\right)\right)$ where Yldr is the low dynamic range image linear luminance defined on a range of 0.0 to 1.0, and primary_color_profile_to_luminance is a function that converts the primary colors of an image (the LDR frame) to the linear luminance value Y for each pixel of the LDR frame at coordinates (x,y). Block 304 may be followed by block 306.

In block 306, a linear luminance is determined for the selected HDR frame. In some implementations, the original HDR frame (e.g., obtained in the HDR video in block 210 of Fig. 2) can be a non-linear or three-channel encoded image (e.g., Perceptual Quantizer (PQ) encoded or hybrid-log gamma (HLG) encoded), and a three-channel linear version of the HDR frame can be generated, e.g., by transforming the non-linear HDR frame to a linear version. In other implementations, any other color space and color profile can be used.

A linear luminance can be determined for the linear HDR frame. For example, a luminance (Y) function can be defined as: ${Y}_{hdr} \left(x, y\right) = primary_color_profile_to_luminance \left(HDR\left(x, y\right)\right)$ where Yhdr is the low dynamic range image linear luminance defined on a range of 0.0 to the range scaling factor, and primary_color_profile_to_luminance is a function that converts the primary colors of an image (the HDR frame) to the linear luminance value Y for each pixel of the HDR frame at coordinates (x,y). Block 306 may be followed by block 308.

In block 308, a pixel gain function is determined based on the linear luminances determined in blocks 304 and 306. The pixel gain function is defined as the ratio between the Yhdr function and the Yldr function. For example: $pixel_gain \left(x, y\right) = Yhdr \left(x, y\right) / Yldr \left(x, y\right)$
where Yhdr is the high dynamic range image linear luminance defined on a range of 0.0 to the range scaling factor, and primary_color_profile_to_luminance is a function that converts the primary colors of an image (the HDR frame) to the linear luminance value Y for each pixel of the HDR frame at coordinates (x,y).

Since zero is a valid luminance value, Yhdr or Yldr can be zero, leading to potential issues in the equation above or when determining a logarithm as described below. In some implementations, the case where Yhdr and/or Yldr is zero can be handled by, for example, defining the pixel_gain function as 1 or by adjusting the calculation to avoid this case with the use of a sufficiently small additional factor (e.g., adding or clamping to a small factor), e.g., represented as epsilon (ε) in the equation below: $pixel_gain \left(x, y\right) = \left(Yhdr\left(x, y\right)+ε\right) / \left(Yldr\left(x, y\right)+ε\right)$

In some implementations, different values of epsilon (ε) can be used in the numerator and denominator of the above equation. Block 308 may be followed by block 310.

In block 310, a range scaling factor is determined based on a maximum luminance of the selected HDR frame to a maximum luminance of the selected LDR frame. For example, the range scaling factor can be a ratio of a maximum luminance of the HDR frame to a maximum luminance of the LDR frame. The range scaling factor is also referred to herein as a range compression factor, and/or a range expansion factor that is the multiplicative inverse of the range compression factor. For example, if the LDR frame is determined from the HDR frame, the range scaling factor can be derived from the amount that the total HDR range was compressed to produce the LDR frame. For example, this factor can indicate an amount that the highlights of the HDR frame are lowered in luminance to map the HDR frame to the LDR dynamic range, or an amount that the shadows of the HDR frame are increased in luminance to map the HDR frame to the LDR dynamic range. The range scaling factor can be a linear value that may be multiplied by the total LDR range to get the total HDR range in linear space. In some examples, if the range scaling factor is 3, then the shadows of the HDR frame are boosted 3 times, or the highlights of the HDR frame are decreased 3 times (or a blend of such shadow boosting and highlight decreasing are to be performed). In some implementations, the range scaling factor can be defined in other ways (e.g., by a camera application or other application, a user, or other content creator) to provide a particular visual effect that may change the appearance of an output image or frames derived from the range scaling factor.

In some implementations, a "universal" range scaling factor can be determined or selected in block 310. A single universal range scaling factor can be associated with a subset of multiple recovery map frames, or all recovery map frames, in the recovery map track. If the current recovery map frame (to be determined in block 312 below) is to be associated with a universal scaling factor (e.g., the current recovery map frame is in the subset of frames, if a subset is being used), the universal scaling factor is selected for use in block 310 if the universal range scaling factor was previously determined. In some examples, a universal range scaling factor may have been determined at any time in method 300. In some implementations, the universal range scaling factor can be determined in block 310 if it has not yet been determined. In some example implementations, such a universal range scaling factor can be determined as the ratio between the maximum HDR luminance of all frames in the HDR video divided by the maximum LDR luminance for all frames in the LDR video. In some examples, the universal range scaling factor can be associated with a subset of multiple recovery map frames that is, in turn, associated with a set of LDR frames of the LDR video (or HDR frames of the HDR video) that have at least a threshold pixel or content similarity, e.g., as determined by a pixel similarity measurement technique. In some of the implementations using a universal scaling factor, there may be less dynamic range to represent all the possible luminances in the HDR video. Block 310 may be followed by block 312.

In block 312, a recovery map frame is determined that encodes the pixel gain function scaled by the associated range scaling factor. The recovery map frame is thus, via the pixel gain function, based on the two linear frames containing the desired HDR frame luminance (Yhdr), and the LDR frame luminance (Yldr). In some implementations, the recovery map frame is a scalar function that encodes the normalized pixel gain in a logarithmic space, and is scaled by the associated range scaling factor (e.g., multiplied by the inverse of the range scaling factor). In some examples, the recovery map frame values are proportional to the difference of logarithmic HDR and LDR luminances, divided by the log of the range scaling factor. For example, the recovery map frame can be defined as: $recovery \left(x, y\right) = log \left(pixel_gain\left(x, y\right)\right) / log \left(range_scaling_factor\right)$

In some example implementations, recovery(x,y) can tend to be in a range of -1 to +1. Values below zero make pixels (in the LDR frame) darker, for display on an HDR display device, while values above zero make the pixels brighter. In some examples of the impact of the recovery map range, to boost the highlights when displaying the frame on an HDR display (examples described with reference to Fig. 5), these values can typically be in the range ~[0..1] (e.g., applying the recovery map holds shadows steady, and boosts highlights), so that the brightest area of a frame can have values close to 1, and darker areas of the frame can typically have values close to 0. In some implementations, to push the shadows down (darker) when displaying on an HDR display device, these values can typically be in the range ~[-1..0] (e.g., applying the recovery map holds highlights steady, and re-darkens the shadows). In some implementations, to provide a combination of boosting highlights and re-darkening shadows when displaying on an HDR display device, then these values can encompass the full [-1..1] range.

In some implementations as described above, the frames are converted to, and processing is performed in, logarithmic space for ease of operations. In some implementations, the processing can be performed in linear space via exponentiation and interpolating the exponents, which is mathematically equivalent. In some implementations, the processing can be performed in linear space without exponentiation, e.g., naively interpolate/extrapolate in linear space.

When applying the recovery map of the recovery map frame to the LDR frame for display, the associated range scaling factor in general indicates an amount to increase pixel brightness by and the map indicates that some pixels may be made brighter or darker. The recovery map indicates a relative amount to scale each pixel (or pixel region), and the range scaling factor indicates a specific amount of scaling to be performed. The range scaling factor provides normalization and context to the relative values in the recovery map. The range scaling factor enables making efficient use of all the bits used to store the recovery map, regardless of the amount of scaling to apply via the recovery map. This means a larger variety of frames can be encoded accurately. For example, every map may contain values in the range of, e.g., -1 to 1, and the values are given context by the range scaling factor, such that this range of values can represent maps that scale to a larger total range (e.g., 2 or 8) equally well. For example, one frame in the described format can have a range scaling factor of 2 and a second frame can have a range scaling factor of 8. Without a range scaling factor, the maximum/minimum absolute gain values are decided in the map. If this value is, e.g., 2, then the second frame with a range scale of 8 cannot be represented. If this value is, e.g., 8, then two bits of information are wasted for every pixel in the recovery map when storing the frame with a range scale of 2. Such implementations without a range scaling factor may be more likely to have an (undesired) visual difference in the displayed output HDR frame compared to the original HDR frame used for encoding (e.g., a severe form of such a difference could be banding).

In some implementations, when pixel_gain is 0.0, the recovery function can be defined to be -2.0, which is the largest representable attenuation. The recovery function can be outside the range -1.0 to +1.0, since one or more areas or locations in the frame may require greater scaling (attenuation or gain) than represented by the range scaling factor to recover the dynamic range of the original HDR frame. The range of -2.0 to +2.0 may be sufficient to provide such greater scaling (attenuation or gain). Block 312 may be followed by block 314.

In block 314, it can be determined whether there is another recovery map frame of the recovery map track to determine. For example, this block may have a positive result if a recovery map frame has not been generated for one or more frames of the video. If there is another recovery map frame to determine, then the method may continue to block 302 to select a new pair of corresponding frames of the LDR video and the HDR video for which to generate a recovery map frame. If there are no further recovery map frames to determine (e.g., all of the frames of the LDR video and HDR video have an associated recovery map frame, or another condition has occurred to stop determination of recovery map frames), then block 316 may follow block 314.

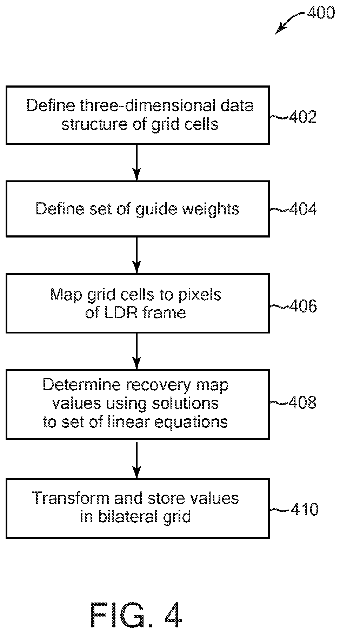

In block 316, the recovery map frames, which form the recovery map track, are encoded into a compressed form. This can enable a reduction in the storage space required to store the recovery map track. The compressed form can be a variety of different compressions, formats, etc. In some implementations, the recovery map frames are encoded into a bilateral grid, as described in greater detail below with respect to Fig. 4 (e.g., where each recovery map frame can be encoded as a recovery map in a respective bilateral grid, and pixel_gain is as described above for blocks 308-310). In some implementations, the recovery map frames can be compressed or otherwise reduced in storage requirements based on one or more additional or alternative compression techniques. In some implementations, the recovery map frames can be compressed to lower resolution recovery frames that have a lower resolution than the recovery map frames determined in block 312. This recovery frame can occupy less storage space than the full-resolution recovery map frame. For example, H.264/AVC, H.265/HEVC, VP9, AV1, or other codecs can be used for encoding/decoding of recovery map frames in various implementations.

In some implementations, block 316 can be performed after block 312 for the particular recovery map frame that is being processed, and block 314 can be performed after block 316 in such implementations. In some implementations, blocks 304 and 306 may be performed in parallel. In some implementations, block 316 may not be performed and the recovery map track may store the recovery map frame(s) directly. In some implementations, method 300 may be performed in parallel for multiple pairs of LDR and HDR video frames to speed up generation of the recovery map.

Fig. 4 is a flow diagram illustrating an example method 400 to encode a recovery map frame of a recovery map track into a bilateral grid, according to some implementations. For example, method 400 can be implemented in blocks 312 and 316 of method 300 of Fig. 3, e.g., where one or more recovery map frames are determined based on luminances of an HDR video frame and an LDR video frame and is encoded and/or stored in compressed form, which in described implementations of Fig. 4 the compressed form is a bilateral grid. The bilateral grid is a three-dimensional data structure of grid cells mapped to pixels of the LDR frame based on guide weights, as described below.

Method 400 may begin at block 402, a three-dimensional data structure of grid cells is defined. The three-dimensional data structure has a width, height, and depth in a number of cells, indicated as a size WxHxD, where the width and height correspond to width and height of the currently-processed LDR frame and the depth corresponds to a number of layers of cells of WxH. A cell in the grid is defined as the vector element at (width, height) and of length D, and is mapped to multiple pixels of the LDR frame. Thus, the number of cells in the grid can be much less than the number of pixels in the LDR frame. In some examples, the width and height can be approximately 3% of the LDR frame size and the depth can be 16. For example, a 1920x1080 LDR frame can have a grid of a size on the order of 64x36x16. Block 402 may be followed by block 404.

In block 404, a set of guide weights is defined. In some implementations, the set of guide weights can be defined as a multiple-element vector of floating point values, which can be used for generating and decoding a bilateral grid. The guide weights represent the weight of the respective elements of an input pixel of the LDR frame, LDR(x,y), for determining the corresponding depth D for the cell that will map to that input pixel. For example, the set of guide weights can be defined as a 5-element vector: $guide_weights = \left\{weight_r, weight_g, weight_b, weight_min, weight_max\right\}$ where weight_r, weight_g, and weight_b refers to the weight of the respective input pixel's color component (red, green, or blue), and weight_min and weight_max respectively refer to the weight of the minimum component value of the r, g, and b values, and the weight of the maximum component value of the r, g, and b values (e.g., min(r,g,b) and max(r,g,b)).

In one example, the LDR frame is in the Rec. 709 color space, and the guide weights can be set to the following values, e.g., in order to represent a balance of the luminance of the LDR(x,y) pixel and that pixel's minimum and maximum component values: $guide_weights = \left\{0.1495, 0.2935, 0.057, 0.125, 0.375\right\}$

In this example, these guide weight values weight the grid depth lookup by 50% for the pixel luminance (r, g, b values), by 12.5% for the minimum component value, and by 37.5% for the pixel maximum component value. In some implementations, these values add up to 1.0, e.g., so that every grid cell can always be looked up (unlike when the values add up to less than 1.0), and the depth of a pixel can't overflow beyond the final depth level in the grid (unlike when the values add up to more than 1.0). Guide weight values can be determined, for example, heuristically by having persons visually evaluate results. In some implementations, a different number of guide weights can be used, e.g., only three guide weights for the pixel luminance (r, g, b values).

Block 404 may be followed by block 406.

In block 406, the grid cells are mapped to pixels of the LDR frame based on the guide weights. The guide weights are used to determine the corresponding depth D for the cell that will map to that input pixel.

In some implementations, the width (x) and height (y) of grid cells are mapped to the pixels (x,y) of the LDR frame. For example, the pixels x,y of the LDR frame can be translated to the x,y coordinates of the grid cells as: $grid_x = ldr_x / ldr_W * \left(grid_W-1\right)$ $grid_y = ldr_y / ldr_H * \left(grid_H-1\right)$ where grid_x and grid_y are the x and y locations of a grid cell, ldr_x and ldr_y are the x and y coordinates of a pixel of the LDR frame being mapped to the grid cell, ldr_W and ldr_H are the total pixel width and height of the LDR frame, and grid_W and grid_H are the total width and height cell dimensions of the bilateral grid, respectively.

In some implementations, for the depth of the grid cells mapped to the LDR frame, the following equation can be used: $z _ idx \left(x, y\right) = \left(D-1\right) * \left(guide_weights\cdot \left\{r,g,b,min\left(r, g, b\right),max\left(r, g, b\right)\right\}\right)$ where D is the total cell depth dimension of the grid and z_idx(x,y) is the depth in the bilateral grid for the cell mapped to the LDR frame pixel (x,y). This equation determines the dot-product of the vector of guide weights and the vector of corresponding values for a particular pixel of the LDR frame, and then scales the result by the size of the depth dimension in the grid to indicate the depth of the corresponding cell for that particular pixel. For example, the guide weight multiplication result can be a value between 0.0 and 1.0 (inclusive), and this result is scaled to the various depth levels (buckets) of the grid. For example, if D is 16, a multiplication value of 0.0 results in mapping into bucket 0, a value of 0.5 results in mapping into bucket 7, and a value of 1.0 results in mapping into bucket 15 (which is the last bucket). Block 406 may be followed by block 408.

In block 408, recovery map frame values are determined using solutions to a set of linear equations. For example, in some implementations the input to the bilateral grid is defined using the following equation: $pixel_gain \left(x, y\right) = bilateral_grid_linear \left(x,y,z_idx\left(x, y\right)\right)$ where pixel_gain(x,y) is the value at pixel (x,y) of the pixel_gain function described above with respect to method 300 of Fig. 3. Bilateral_grid_linear is the bilateral grid contents representing pixel gains in linear space. The coordinates x, y, and z_idx are the coordinates of the bilateral grid, which are different from the x,y coordinates of the LDR frame. Through z_idx, the guide weights inform what depth that pixel_gain is located in the bilateral grid for each pixel of the LDR frame, and this informs how to set up a linear set of equations to solve in block 410. Block 408 may be followed by block 410.

In some implementations, the encoding is defined as the solution to the set of linear equations that minimizes the following equation for each grid cell: ${\left(pixel_gain\left(x, y\right)*Yldr\left(x, y\right)-Yhdr\left(x, y\right)\right)}^{2}$

The Yldr and Yhdr values are luminance values of the LDR frame and the HDR frame, respectively, at the (x,y) pixel position of the LDR frame. The pixel_gain(x,y) values that minimize the value of the above equation are solved for based on where each pixel is looked up into the depth vectors as indicated in the previous equation above; this is predetermined based on the guide weights.

The resulting values are defined as the following:
For { x,y,z } over { [0,W), [0,H), [0,D) }: bilateral_grid_linear(x,y,z)

This definition specifies that the bilateral grid is defined for x from 0 to the total grid width, for y from 0 to the total grid height, and for z from 0 to the total grid depth. For example, if the bilateral grid is 64x36x16, then grid values are defined for x over 0 to 63 inclusive, for y over 0 to 35 inclusive, and for z over 0 to 15 inclusive. Block 408 may be followed by block 410.

In block 410, the solved values are transformed and stored in the bilateral grid. For example, the solved values can be transformed as: $bilateral_grid \left(x, y, z\right) = log \left(pixel_gain\left(x, y\right)\right) / log \left(range_scaling_factor\right)$ or $bilateral_grid \left(x, y, z\right) = log \left(bilateral_grid_linear\right) / log \left(range_scaling_factor\right)$ Bilateral_grid is the bilateral grid contents representing pixel gains in log space. These values are stored as an encoded recovery map frame. As indicated in these equations, the normalized pixel gain between the LDR frame and the HDR frame is encoded in a logarithmic space and scaled by the range scaling factor, similarly as described above with respect to block 310 of Fig. 3. An encoded recovery map frame can be similarly determined for each set of corresponding LDR and HDR frames of the video.

When decoding the recovery map frame from the bilateral grid for display of an HDR frame having greater dynamic range than the corresponding LDR frame (as described in greater detail with respect to Fig. 5), each recovery map frame value is extracted from the bilateral grid. In the below equations, r, g, and b are the respective component values for a pixel LDR(x,y) of the LDR frame. $z _ idx \left(x, y\right) = \left(D-1\right) * \left(guide_weights\cdot \left\{r,g,b,min\left(r, g, b\right),max\left(r, g, b\right)\right\}\right)$ $recovery \left(x, y\right) = bilateral_grid \left(x,y,z_idx\left(x, y\right)\right)$ where recovery(x,y) is the extracted recovery map frame. In some implementations, z_idx, as determined in the first equation, can be rounded to the nearest whole number before being input to bilateral_grid(x,y,z) in the second equation.

Fig. 5 is a flow diagram illustrating an example method 500 to decode a video of a backward-compatible high dynamic range video format and display an HDR video, according to some implementations. In some implementations, method 500 can be performed, for example, on a server system 102 as shown in Fig. 1. In some implementations, some or all of the method 500 can be implemented on one or more client devices such as client devices 120, 122, 124, or 126 of Fig. 1, one or more server devices such as server device 104 of Fig. 1, and/or on both server device(s) and client device(s). In described examples, the implementing system includes one or more digital processors or processing circuitry ("processors"), and one or more storage devices (e.g., a database or other storage). In some implementations, different components of one or more servers and/or clients can perform different blocks or other parts of the method 500. In some examples, a device is described as performing blocks of method 500. Some implementations can have one or more blocks of method 500 performed by one or more other devices (e.g., other client devices or server devices) that can send results or data to the first device.

In some implementations, the method 500, or portions of the method, can be initiated automatically by a system. For example, the method (or portions thereof) can be performed periodically, or can be performed based on one or more particular events or conditions, e.g., a client device launching image application 106, capture or reception of new images (including videos) by a client device, upload of new images (including videos) to a server system 102, a predetermined time period having expired since the last performance of method 500, and/or one or more other conditions occurring which can be specified in settings read or received by the system performing the method.

Method 500 can be performed by a different device than the device that created the video container. For example, a first device can create the video container and store it in a storage location (e.g., a server device) that is accessible by a second device that is different than the first device. The second device can access the video container to display a video therefrom according to method 500. In some implementations, a single device can create the video container as described in method 200 and can decode and display the video container as described in method 500. In some implementations, a first device can decode a video stream (or video file) from the video container based on method 500, and can provide the decoded video stream or file to a second device to display the video stream or file.

Similarly as described above with reference to Fig. 2, in some implementations, a first device (e.g., a server device in the cloud) can decode two video streams from the video container (e.g., a base video stream and a derived video stream based on the base video stream and recovery map frame) and send the two video streams to a second device to select and display one of the video streams as determined by the second device, e.g., based on the display device characteristics of the second device.

In some implementations, a first device (e.g., a server device in the cloud) can decode multiple video streams from the video container (e.g., a base video stream and a recovery map track (and in some implementations, timed metadata track, or the metadata can be included in a different stream) and send the video streams to a second device, where the second device (based on its display device characteristics) either selects the base video stream to display directly (e.g., ignoring the recovery map track), or applies the recovery map track to the base video stream to generate a derived video stream that is displayed by the second device. In some examples, the application of recovery map track to base video stream can be performed by a hardware decoder, and/or by a CPU and/or GPU of the second device. In various implementations, specialized hardware codecs can be used to accelerate the application of the recovery map track to the video frames.

User permissions can be obtained to use user data in method 500 (blocks 510-534). For example, user data for which permission is obtained can include images stored on a client device (e.g., any of client devices 120-126) and/or a server device, image metadata, user data related to the use of an image application, other image-based creations, etc. The user is provided with options to selectively provide permission to access all, any subset, or none of user data. If user permission is insufficient for particular user data, method 500 can be performed without use of that of user data, e.g., using other data (e.g., images not having an association with the user).

Method 500 may begin at block 510. In block 510, a video container is obtained that includes an LDR video and a recovery map track. The recovery map track includes multiple recovery map frames as described above. For example, the video container can be a container created by method 200 of Fig. 2, that generates a recovery map track from an HDR video and an LDR video, where the HDR video has a greater dynamic range than the LDR video. The recovery map track can be provided in the container as a recovery element in some implementations, as described above. The video container can have a standardized format that is supported and recognized by the device performing method 500, e.g., a file for ISOBMFF and/or MP4. Other examples of usable formats can include WebM and Matroska, and/or Extensible Metadata Platform (XMP) encoded data (which, e.g., can be stored in ISOBMFF containers, and can be used to store metadata such as a version of the format and information about the items in the container), etc. In some implementations, the recovery map track can be stored as a secondary video track according to a standard (e.g., ISOBMFF), or the recovery map track can be stored as a different type of auxiliary video, stored in a data structure box such as the rdat box. Block 510 may be followed by block 512.

In block 512, the LDR video in the video container is extracted. In some example implementations, this extraction can include decoding the LDR video from its standard file format to a format for use in display and/or processing. The decoded values from each encoded recovery map frame can be determined in the equation below, where r is the range and n is the number of bits in each recovery map value: $recovery \left(x, y\right) = \left(encode\left(x, y\right)-\left({2}^{∧}n-1\right)/2\right) / \left(\left({2}^{∧}n-1\right)/2r\right)$

In some example implementations, in relation to the example of the quantized encoded map (encode(x,y)) described above for block 218 of Fig. 2 (n = 8 and r = 2), the decoded values from each encoded recovery map frame can be determined as: $recovery \left(x, y\right) = \left(encode\left(x, y\right)-127.5\right) / 63.75$ which provides a scale and offset for a range of recovery map values of -2 to 2 and storing as 8 bits. In another example, if the values stored in a recovery map frame are -1 to 1, the decoded values can be determined as: $recovery \left(x, y\right) = \left(encode\left(x, y\right)-127.5\right) / 127.5$

Other ranges, scales, offsets, number of bits of storage, etc. can be used in other implementations. Block 512 may be followed by block 514.

In block 514, it is determined whether to display an output video that is an HDR video derived from the extracted LDR video (e.g., a derived video), or to display an output video that is the LDR video (e.g., a base video in the video container). The output video is to be displayed on at least one target display device associated with or in communication with the device that is performing method 500 and accessing the video container. The target display device can be any suitable output display device, e.g., display screen, touchscreen, projector, display goggles or glasses, etc. An output HDR video to be displayed can have any dynamic range greater than the dynamic range of the LDR video in the container, e.g., up to a dynamic range of the original HDR video used in creating the video container (e.g., in block 210 of Fig. 2).

The determination of whether to display an output HDR video can be based on one or more characteristics of the target display device that is to display the output video. For example, the dynamic range of the target display device can determine whether to display an HDR video or the LDR video as the output video. In some examples, if the target display device is capable of displaying a greater dynamic range than the dynamic range of the LDR video in the video container, then it is determined to display an HDR video. If the target display device is capable only of displaying the low dynamic range of the LDR video in the container, then it is determined that an HDR video is not to be displayed.

In some implementations or cases, it may be determined to not display an HDR video even though the target display device is capable of greater dynamic range than the LDR video. For example, user settings or preferences may indicate to display a video having a lower dynamic range, or the displayed video is to be displayed as an LDR video to be visually compared to other LDR videos, etc.

If an HDR video is determined to not be displayed in block 514, then the method proceeds to block 516, in which the LDR video extracted from the video container is caused to be displayed by the target display device. Typically, the LDR video is displayed by an LDR-compatible target output device that is not capable of displaying a greater dynamic range than the range of the LDR video. The LDR video can be output directly by the target display device. In this case, the recovery map track and any metadata pertaining to the HDR video format in the video container are ignored. In some implementations, the LDR video is provided in a standard format, and is readable and displayable by any device that can read the standard format.

If an HDR video is determined in block 514 to be displayed as the output video, then the method proceeds to block 518, in which the recovery element in the video container is extracted. Metadata related to display of an output HDR video based on the recovery element can also be obtained from the video container. For example, the recovery element can be or include a recovery map track as described above, and this recovery map track can include and/or be accompanied by metadata as described above. Metadata can also or alternatively be included in the container and/or in the LDR video from the video container. For example, obtained metadata can include respective range scaling factors associated with the recovery map frames of the recovery map track. In some implementations, these range scaling factors can be included in a timed metadata track that includes frames, each frame including a respective range scaling factor associated with a corresponding recovery map frame of the recovery map track.

In some implementations, multiple recovery map tracks (e.g., recovery elements) can be included in the video container. In some of these implementations, one of the multiple recovery elements can be selected in block 518 for processing below. In some implementations, the recovery element that is selected can be specified by user input or user settings, or in some implementations can be automatically selected (e.g., without current user input) by a device performing method 500 or a portion thereof, e.g., based on one or more characteristics of a target output display device or other output display component, where such characteristics can be obtained via an operating system call or other available source. For example, in some implementations, one or more of the recovery elements can be associated with indications of particular display device characteristics that are stored in the video container (or are otherwise accessible to the device performing block 518). If the target display device is determined to have one or more particular characteristics (e.g., dynamic range, peak brightness, color gamut, etc.) the particular recovery element that is associated with those characteristics can be selected in block 518. If the multiple recovery elements are associated with different sets of range scaling factors (e.g., different timed metadata tracks as in Fig, 13), the associated set of range scaling factors is also selected and retrieved. Block 518 may be followed by block 520.

In block 520, the recovery map track is optionally decoded from the recovery element. For example, the recovery map track may be in a compressed or other encoded form in the recovery element, and can be uncompressed or decoded. For example, in some implementations the recovery map track can be encoded in a bilateral grid as described above, and the recovery map track is decoded from the bilateral grid. Block 520 may be followed by block 522.

In block 524, it is determined whether to scale the luminance of the extracted LDR video for the output HDR video. In some implementations, the scaling is based on the display output capability of the target display device. For example, in some implementations or cases, the generation of the output HDR video is based in part on a particular luminance that the target display device is capable of displaying. In some implementations or cases, this particular luminance can be the maximum luminance that the target display device is capable of displaying, such that the display device maximum luminance caps the luminance of the output HDR video. In some implementations or cases, in block 524 it is determined not to scale the luminance of the LDR video, e.g., the generation of the output HDR video does not take the luminance capability of the target display device into account.

If it is determined to not scale the luminance of the output video based on target display device capability in block 524, then the method proceeds to block 526, in which the luminance gains of respective recovery map frames of the recovery map track are applied to the pixels of associated frames of the LDR video, and the pixels of each of these respective frames are scaled based on the associated range scaling factor for the recovery map frame, to determine corresponding pixels of corresponding frames of the output HDR video. For example, the luminance gains and scaling are applied to luminances of pixels of the associated frames of the LDR video to determine respective corresponding pixel values of corresponding frames of the output HDR video that is to be displayed. This causes the output HDR video to have the same dynamic range as the original HDR video used to create the video container.

In some example implementations, each frame of the LDR video and associated display factor are converted to a logarithmic space, and the following equation can be used: $HDR * \left(x, y\right) = LDR * \left(x, y\right) + log \left(range_scaling_factor\right) * recovery \left(x, y\right)$ where HDR*(x,y) is pixel (x,y) of the recovered HDR frame (output frame of the output video) in the logarithmic space; LDR*(x,y) is the pixel (x,y) of the logarithmic space version of the extracted LDR frame (e.g., log(LDR(x,y)); log(range_scaling_factor) is the associated range scaling factor in the logarithmic space; and recovery(x,y) is the recovery map value at pixel (x,y) of the associated recovery map frame. For example, recovery(x,y) is the normalized pixel gain in the logarithmic space.

In some examples, interpolation can be provided between the LDR and HDR versions of each frame of the video when the per-pixel gain is applied, e.g., recovery(x,y) * range scaling factor. This is essentially interpolating between the original version and the range-compressed version of a video, and the interpolation amount is dynamic, both in the sense of being pixel by pixel, and also globally, because it is dependent on the range scaling factor. In some examples, this can be considered extrapolation if the recovery map value is less than 0 or greater than 1.

In some implementations, the LDR video from the video container is nonlinearly encoded, e.g., gamma encoded, and the primary image color spaces of the frames of the non-linear LDR video are converted to linear versions before the LDR video is converted to LDR*(x,y) in the logarithmic space for the equation above. For example, a color space with a standard RGB (sRGB) transfer function can be transformed to a linear color space that preserves the sRGB color primaries, similarly as described above for block 302 of Fig. 3. In some implementations, the LDR video in the container can be linearly encoded, and such a transformation from a non-linear color space is not used.

Applying the luminance gains to luminances of individual pixels of the LDR video results in pixels corresponding to the original (e.g., originally-encoded) HDR video. If lossless storage of the LDR video and the recovery map track is provided, the output HDR video can have the same pixel values as the original HDR video (e.g., if the recovery map track has the same resolution as the LDR video). Otherwise, the output HDR video resulting from block 532 can be a very close approximation to the original HDR video, where the differences are usually not visually noticeable to users in a display of the output video.

In some implementations, the output video can be transformed from the logarithmic space to the output color space for display. In some implementations, the output video color space can be different from the color space of the LDR video extracted from the video container. Block 526 may be followed by block 534, described below.

If it is determined to scale the luminance of the output video based on target display device output in block 524, then the method proceeds to block 528. In block 528, the maximum luminance output of the target display device is determined. The target display device can be an HDR display device, and these types of devices are capable of displaying maximum luminance values that may vary based on model, manufacturer, etc. of the display device. In some implementations, the maximum luminance output of the target display device can be obtained via an operating system call or other source. Block 528 may be followed by block 530, described below.

In block 530, a display factor is determined. The display factor is used to scale the dynamic range of an associated frame of the output HDR video that is to be displayed, as described below. In some implementations, the display factor is determined to be equal to or less than the minimum of the luminance output of the target display device and the range scaling factor for the associated frame. For example, this can be stated as: $display factor \leq min \left(maximum display luminance, range scaling factor\right)$ This determination allows the luminance scaling of the output video to be capped at the maximum display luminance of the target display device. This prevents scaling the output video to a luminance range that is present in the original HDR video from which the video container was created (as indicated in the range scaling factor), but which is greater than the maximum luminance output range of the target display device. In some implementations, the maximum display luminance may be a dynamic characteristic of the target display device, e.g., may be adjustable by user settings, application program, etc.

In some implementations, the display factor can be set to a luminance that is greater than the associated range scaling factor and is less than or equal to the maximum display luminance. For example, this can be performed if the target display device can output a greater dynamic range than the dynamic range present in the original HDR video (which can be indicated in the range scaling factor). In some examples, a user (through user settings or selection input) may indicate that the output video be brightened.

In some implementations, the display factor can be set to a luminance that is below the maximum display luminance of the target display device and the maximum luminance of the original HDR video. For example, the display factor can be set based on a particular display luminance of the display device indicated by one or more display conditions, by user input, user preferences or settings, etc., e.g., to cause output of a lower luminance level that may be desired in some cases or applications as described below. Block 530 may be followed by block 532, described below.

In block 532, the luminance gains of respective recovery map frames of the recovery map track are applied to the pixels of associated frames of the LDR video, and the luminance of the pixels of the associated frames of the LDR video is scaled based on the display factor to determine corresponding pixels of corresponding frames of the output HDR video. For example, the luminance gains encoded in the recovery map frames are applied to pixel luminances of the associated LDR frames to determine respective corresponding pixel values of the corresponding frames of the output HDR video that is to be displayed. These pixel values are scaled based on the display factors associated with the LDR frames as determined in block 530, e.g., based on a particular luminance output of the target display device (which can be the maximum luminance output of the target display device). In some implementations, this allows the highlight luminances in the LDR video to be increased to a level that the display device is capable of displaying, up to a maximum level based on the dynamic range of the original HDR video; or allows the shadow luminances in the LDR video to be decreased to a level that the display device is capable of displaying, down to a lower limit based on the dynamic range of the original HDR video.

In some example implementations, each frame of the LDR video and associated display factor are converted to a logarithmic space, and the following equation can be used: $HDR * \left(x, y\right) = LDR * \left(x, y\right) + log \left(display_factor\right) * recovery \left(x, y\right)$ where HDR*(x,y) is pixel (x,y) of the recovered HDR frame (output frame of the output video) in the logarithmic space; LDR*(x,y) is the pixel (x,y) of the logarithmic space version of the extracted LDR frame (e.g., log(LDR(x,y)); log(display_factor) is the associated display factor in the logarithmic space; and recovery(x,y) is the recovery map value at pixel (x,y) of the associated recovery map frame. For example, recovery(x,y) is the normalized pixel gain in the logarithmic space.

In some examples, interpolation can be provided between the LDR and HDR versions of each frame of the video when the per-pixel gain is applied, e.g., recovery_map(x,y) * display factor. This is essentially interpolating between the original version and the range-compressed version of a video, and the interpolation amount is dynamic, both in the sense of being pixel by pixel, and also globally, because it is dependent on the display factor. In some examples, this can be considered extrapolation if the recovery map value is less than 0 or greater than 1.

In some implementations, the LDR video from the video container is nonlinearly encoded, e.g., gamma encoded, and the primary image color spaces of the frames of the non-linear LDR video are converted to linear versions before the LDR video is converted to LDR*(x,y) in the logarithmic space for the equation above. For example, a color space with a standard RGB (sRGB) transfer function can be transformed to a linear color space that preserves the sRGB color primaries, similarly as described above for block 302 of Fig. 3. In some implementations, the LDR video in the container can be linearly encoded, and such a transformation from a non-linear color space is not used.

Applying the luminance gains to luminances of individual pixels of the LDR video results in pixels corresponding to the original (e.g., originally-encoded) HDR video. If lossless storage of the LDR video and the recovery map track is provided, the output HDR video can have the same pixel values as the original HDR video (e.g., if the recovery map track has the same resolution as the LDR video). Otherwise, the output HDR video resulting from block 532 can be a close approximation to the original HDR video, where the differences are usually not visually noticeable to users in a display of the output video.

In some implementations, the output video can be transformed from the logarithmic space to the output color space for display. In some implementations, the output video color space can be different from the color space of the LDR video extracted from the video container. Block 532 may be followed by block 534.

In block 534, the output HDR video determined in block 526 or in block 532 is caused to be displayed by the target display device. The output HDR video is displayed by an HDR-compatible display device that is capable of displaying a greater dynamic range than the range of the LDR video. The output HDR video generated from the video container can be the same as the original HDR video that was used to create the video container, due to the recovery map storing the luminance information, or may be similar, e.g., approximately the same and visually indistinguishable from the original HDR video.

In some implementations, the output HDR video (obtained in block 526 or 532) may be suitable for display by the target display device, e.g., as a video with linear image frame or other output HDR video format. For example, the output HDR video may have been processed via the display factors of block 532, and may not need to be modified further for display, such that the output HDR video resulting from applying the recovery map track is directly rendered for display.

In some implementations or cases, the output HDR video can be converted to a different format for display by the target display device, e.g., to an video format that may be more suitable for display by the target display device than the output HDR video. For example, the output HDR video from block 526 (or from block 532 in some implementations) can be converted to a luminance range that is more suited to the capabilities of the target display (which, in some implementations, can be in addition to the use of a display factor as in block 532). In some implementations, the output HDR video can be converted to a standard video having a standard video format, e.g., HLG/PQ or other standard HDR format. In some of these examples, a generic tone mapping technique can be applied to such a standard video for display by the target display device.

In some implementations or cases, an output HDR video that has been generated for the target display device via the display factor of block 532, without being further converted to a standard format and processed for display using a generic tone mapping technique, may provide a higher quality video display on the target device than an output HDR video that is so converted and generated via a generic tone mapping technique. For example, local tone mapping provided via the recovery map can provide higher quality videos than generic or global tone mapping, e.g., greater detail. Furthermore, there may be ambiguity and differences in conversion from HDR videos to some standard formats using a global tone mapping technique, based on different device specifications and implementations.

In some implementations, a technique can be used to output frames to the display device in a linear format, e.g., an extended range format where 0 represents black, 1 represents SDR white, and values above 1 represent HDR brightnesses. Such a technique can avoid issues with global tone mapping techniques to handle display capabilities of the target display device. One or more techniques described herein can handle display device display capabilities via application of the recovery map via a display factor as described above, so that extended range values do not exceed display capabilities of the display device.

As described above, a device can scale the pixel luminances of an LDR video based on a maximum luminance output of an HDR display device and based on the luminance gains stored in the recovery map. In some implementations, e.g., in many photography and videography uses, the scaling of the LDR video can be used to produce an HDR output video that reproduces the full dynamic range of the original HDR video used to create the video container (if the target display device is capable of displaying that full range). In some implementations, the scaling of the LDR video can set, for the output HDR video, an arbitrary dynamic range above the range of the LDR video. In some implementations, the dynamic range can also be below the range of the original HDR video. For example, the output video luminances can be scaled based on the capability of the target display device or other criteria, or can be scaled lower than the original HDR video and/or lower than the maximum capability of the target display device so as to reduce the displayed brightness in the video that, e.g., may be visually uncomfortable or fatiguing for viewers. For example, a fatigue-reducing algorithm and one or more light sensors in communication with a device implementing the algorithm can be used to detect one or more of various factors such as ambient light around the display device, time of day, etc. to determine a reduced dynamic range or reduced maximum luminance for the output video. For example, the reduced luminance level of the output video can be obtained by scaling the recovery map frame values and/or display factor that are used in determining an HDR video as described for some implementations herein, e.g., scale the range_scaling_factor and/or display factor in the example equations indicated above. In another example, a device may determine that its battery power level is below a threshold level and that battery power is to be conserved (e.g., by avoiding high display brightness), in which case the device causes display of HDR videos at less than the brightness of the original HDR video.

In some implementations, the luminances of the LDR video can be scaled greater (e.g., higher) than the dynamic range of the original HDR video, e.g., if the target display device has a greater dynamic range than the original HDR video. The dynamic range of the output HDR video is not constrained to the dynamic range of the original HDR video, nor to any particular high dynamic range. In some examples, the maximum of the dynamic range of the output HDR video can be lower than the maximum dynamic range of the original HDR video and/or lower than the maximum dynamic range of the target output device.

In some implementations, display of the output HDR video can be gradually scaled from a lower luminance level to the full (maximum) luminance level of the output HDR video (the maximum luminance level determined as described above). For example, the gradual scaling can be performed over a particular period of time, such as 2-4 seconds (which can be user configurable in some implementations). Gradual scaling can avoid user discomfort that may result from a large and sudden increase of brightness when displaying a higher-luminance HDR video after displaying a lower luminance (e.g., display of an LDR video). Gradual scaling from the LDR video to the HDR version of that video can be performed, for example, by scaling the recovery map frame values and/or display factor used in determining an HDR video as described herein, e.g., in multiple steps to gradually brighten the LDR video to the HDR version of the video. For example, the range_scaling_factor and/or display_factor can be scaled in the equations indicated above. In other implementations, multiple scaling operations can be performed in succession to obtain intermediate images of progressively higher dynamic range over the period of time. Other HDR video formats that scale LDR videos to HDR videos using global tonemapping techniques as described above instead of local tonemapping as described for the HDR format herein may have poorer display quality when performing such gradual scaling or may not support gradual scaling.

In some examples, this gradual scaling of HDR video luminance can be performed or triggered for particular display conditions. Such conditions can include, for example, when the output HDR video is displayed immediately after display of an LDR video by the display device (or an output HDR video frame is displayed immediately after display of an LDR video frame). In some examples, a grid of LDR videos and/or images can be displayed, and the user selects one of these videos (or a frame thereof) to fill the screen with a display of the HDR version of the selected video or frame (where the HDR video can be determined based on the recovery element from an associated video container as described above). To avoid a large sudden increase of brightness when changing from LDR video display to HDR video display, the HDR video can be initially displayed at the lower luminance level of the LDR video and gradually updated (e.g., by progressively displaying the video content with higher dynamic range, increasing in increments up to its maximum luminance level; e.g., fade-in and fade-out animations. In another example, the display conditions to trigger gradual scaling can include an overall screen brightness that is set at a low level as described herein (e.g., based on an ambient low light level around the device). For example, the overall screen brightness can have a luminance level below a particular threshold level to trigger the gradual scaling of HDR luminance.

In some cases or conditions, an output HDR video can be immediately displayed at its maximum luminance without the gradual scaling, e.g., when one or more HDR videos are being displayed and are to be replaced by the output HDR video. For example, when a second HDR video is displayed following the display of a first HDR video, the second HDR video can be immediately displayed at its maximum luminance since the user is already accustomed to viewing the increased luminance of the first HDR video.

In some implementations, after display of the output video (e.g., either the LDR or HDR output video), the device that provides the display of the output video can receive user input from a user (or other source, e.g., other device) that instructs to modify the display of the output video, e.g., to increase or reduce the dynamic range of the display, up to the maximum dynamic range of the display device and/or the original HDR video. For example, in response to receiving user input that modifies the display, the device can modify the display factor (described above) in accordance with the user input, which changes the dynamic range of the displayed output video. In some examples, if the user decreases the dynamic range, the display factor can be reduced by a corresponding amount and the output video displayed with a resulting lower dynamic range. This change of display can be provided in a real-time manner in response to user input.

In some implementations, after display of the output video, the device providing the display of the output video can receive input that instructs to modify or edit the output video, e.g., input from a user or other source, e.g., other device. In some implementations, the recovery map track can be discarded after such modification, e.g., it may no longer properly apply to the LDR video. In some implementations, the recovery map track can be preserved after such modification. In some implementations, the recovery map track can be updated based on the modification to the output video to reflect the modified version of the LDR video.

In some examples, if the modification is performed by a user on an HDR display and/or via an HDR-aware editing application program, then characteristics of the modification are known in the greater dynamic range and recovery map frames can be determined based on the edited video frames. For example, in some implementations, at load time of a video frame to an image editing interface, the associated recovery map frame can be decoded to a full-resolution image and presented in the editor as an alpha channel, other channel, or data associated with the video frame. For example, the recovery map frame can be displayed in the editor as an extra channel in a list of channels for the video frame. One or more corresponding frames of the LDR video and the HDR output video can both be displayed in the editor, to provide visualization of modifications to the video in both versions. When edits to the video are made by the user using tools of the editor, corresponding edits are made to the recovery map frame and to the corresponding LDR video frame (base frame). In some examples, the user can decide whether to edit RGB, or RGBA (red green blue alpha), for the video. In some implementations, the user can edit the recovery map frame (e.g., alpha channel) manually, and view the displayed HDR frame change while the displayed corresponding LDR frame stays the same.

In some implementations, an overall dynamic range control can be provided in the image editing interface, which can adjust the associated range scaling factor higher or lower. Edit operations to images such as cropping, resampling, etc. can cause the alpha channel to be updated in the same way as the RGB channels. At the time of saving the video, an LDR video can be saved back into the video container. The saved LDR video may have been edited in the interface, or may be a new LDR video generated via local tone mapping from an edited HDR video or generated based on the edited HDR video frame(s) scaled by (e.g., divided by) the associated recovery map frame(s) at each pixel. An edited recovery map track can be saved back into the video container. In various implementations, the recovery map track can be processed back into a bilateral grid, if such encoding is used; or the video and recovery map track can be saved losslessly, with greater storage requirements, e.g., if additional editing to the video is to be performed.

In some implementations, a video editor or any other program can convert an LDR video and recovery map track of the described image format into a standard HDR video, e.g., a 10-bit HDR10 or HDR10+, HLG, or Dolby Vision video or a video of a different HDR format.

In various implementations, various blocks of methods 200, 300, 400, and/or 500 may be combined, split into multiple blocks, performed in parallel, or performed asynchronously. In some implementations, one or more blocks of these methods may not be performed or may be performed in a different order than shown in these figures. For example, in various implementations, blocks 210 and 212 of Fig. 2, and/or blocks 304 and 306 of Fig. 3, can be performed in different orders or at least partially in parallel. Methods 200, 300, 400, and/or 500, or portions thereof, may be repeated any number of times using additional inputs. For example, in some implementations, method 200 may be performed when one or more new videos are received by a device performing the method and/or are stored in a user's image library.

In some implementations, the HDR video and LDR video can be reversed in their respective roles described with reference to Figs. 2-5. For example, the original HDR video can be stored in the video container (e.g., as the base video or primary video) instead of the original LDR image that has lower dynamic range than the HDR video. A recovery map track can be determined and stored in the video container, similarly as described above, that indicates how to determine a derived output LDR video from the base HDR video for an LDR display device that can only display a lower dynamic range that is lower than the dynamic range of the HDR video. The recovery map track can include recovery map frames having gains and/or scaling factors that are based on the base HDR video frames and corresponding original LDR video frames, where the original LDR video frames, in some implementations, can be tone-mapped frames (or other range conversion of the HDR video), similarly as described above. In some examples, the base video can be 10-bit HDR video, and each frame of the recovery map track can be generated based on LDR video that was generated from the base video using local tone mapping and which has 8-bit LDR bit-depth.

Some of the described implementations can allow applications that record HDR videos to obtain and output higher quality LDR videos based on local tone mappings of the HDR video via the recovery map track, without the limitations of current techniques (e.g., HLG/PQ transfer functions) that provide global or generic tone mapping. The local tone mapping provided by use of the recovery map techniques as described herein, without applying global or generic tone mapping, can enable higher fidelity conversions to LDR videos from HDR videos, e.g., for uses such as sharing videos, or uploading videos to services or applications that only support LDR video.

In some implementations, a luminance control can be provided for display of HDR videos such as the HDR videos described herein. The HDR luminance control can be adjusted by the user of the device to designate a maximum luminance (e.g., brightness) at which HDR videos are displayed by the display device. In some implementations, the maximum luminance of the HDR video can be determined as a maximum of the average luminance of the displayed pixels of the HDR video, since such an average may be indicative of perceived video brightness to users. In other implementations, the maximum luminance can be determined as a maximum of the brightest pixel of the HDR video, as a maximum of one or more particular pixels of the HDR video (or a maximum of an average of such particular pixels), and/or based on one or more other characteristics of the HDR video. If the luminance control is set to a value below the maximum displayable luminance of HDR videos, the device reduces the maximum luminance of the output HDR video to a lower luminance level that is based on the luminance control. This allows the user to adjust the maximum luminance of displayed HDR videos if the user prefers a lower maximum luminance level, e.g., to avoid discomfort or fatigue from glare of high luminance HDR videos, and/or to reduce contrast between a high luminance HDR video and other contents of a display screen outside of the HDR video (which may be being displayed at lower luminance, e.g. LDR videos, user interface elements, etc.). In some cases, a reduced maximum luminance level for HDR videos can reduce the expenditure of battery power by the device providing the display due to the lower brightness of the display.

For example, the HDR luminance control can be implemented as a global or system luminance control provided by the device (e.g., provided by an operating system executing on the device) that controls HDR video luminance for applications that execute on the device and which display HDR videos. In some examples, the luminance control can be applied to all such applications that execute on the device, all applications of a particular type that execute on the device (e.g., video viewing and video editing applications), and/or particular applications designated by the user. This allows the user, for example, to designate a single luminance adjustment for all (or many) HDR videos displayed by a device, without having to adjust luminance for each individual displayed HDR video. Such a system luminance control can provide consistency of display by all applications that execute on the device and also can provide more control to the user as to the maximum luminance of displayed HDR videos. In some implementations, the HDR luminance control can be implemented with other system controls on a device, e.g., as accessibility controls, user preferences, user settings, etc. The value set by the system luminance control can be used to adjust the output of an HDR video output in addition to any other scaling factors being used to display that video, e.g., the display factor based on the maximum display device luminance as described above, individual luminance settings for an video, etc.

In some examples, the system luminance control can be implemented as a slider or a value that can be adjusted by the user, e.g., to indicate a maximum luminance value or a percentage of maximum displayable luminance for HDR videos by the display device (e.g., where the maximum luminance can be determined as the maximum of average luminance of the pixels of the HDR video, the maximum of the brightest pixel or particular pixels of the HDR video, or a maximum based on one or more other video characteristics). For example, if the luminance control is set to 70% by the user, HDR videos can be displayed at 70% of their maximum luminance (e.g., 70% of the maximum luminance of the display device if that is used to determine maximum luminance as described above). In some implementations, the system luminance control can allow a user to designate different maximum HDR video luminances for different screen luminances. For example, if the entire screen is displaying content at a higher screen luminance, the maximum HDR video luminance can be higher, e.g., 90% or 100%, since there is not much contrast between the overall screen luminance and the HDR video luminance. At low screen luminance, the maximum HDR video luminance can be lower, e.g., 50% or 60%, to reduce the contrast between the overall screen luminance and HDR video luminance. In some implementations, the system luminance control can be provided as a setting (e.g., via a slider or other interface control) that is relative to the maximum SDR video luminance. For example, the setting could set the maximum HDR luminance value to a value that is N times the maximum LDR video luminance, where N has a maximum settable value that is based on the maximum luminance of the display device used to display the videos. In some examples, a setting value of 1 can indicate a maximum luminance of the LDR (base) video, and a setting value that is a maximum value or setting of the luminance control indicates to display at the maximum luminance of the display device.

In some implementations, these variable settings for HDR video luminance can be input via user interface controls. For example, the user can define a curve that has a variable maximum HDR luminance vs. current screen luminance. In some implementations, multiple predetermined HDR luminance configurations can be provided in a user interface, and the user can select one of these configurations for use on the device. For example, each configuration can provide a different set of maximum HDR luminance values associated with particular ranges of screen luminance values. In some implementations, a toggle control can be provided that, if selected by the user, removes the HDR luminance such that HDR videos are displayed at LDR luminance. For example, if the toggle is selected by the user, an associated recovery map or recovery element (as described herein) can be ignored and the base video is displayed.

Fig. 6 is a diagrammatic illustration of an example video container 600 that can be used to provide a video in a backward-compatible high dynamic range video format, e.g., store a backward-compatible high dynamic range video, according to some implementations. For example, video container 600 can be used with any of the implementations described above with respect to Figs. 2-5. Other types of video containers can be used in various other implementations.

In this example, the video container provides data according to the MPEG-4 video format (or other ISO-based format). Video container 600 includes several blocks or units of data, e.g., "boxes" or "atoms" which can be identified by a type identifier and length. These boxes can include "ftyp" 602, which includes information about the variant of the MP4 format the file uses, e.g., the type of encoding, compatibility, and/or intended usage of the file. The "moov" box 604 can define timescale, duration, and display characteristics of the primary video data in the container (described below). The "meta" box 606 can include metadata for the primary video data and can include metadata, e.g., offset and length in bytes, of a top-level box, rdat 610, related to recovery map data, as described below.

Video container 600 includes an "mdat" box 608 that includes the primary video data (e.g., base video) of the container. This can be a conventional video track in the container. For example, the primary video data can be original LDR video data that can be converted to HDR video data in the processes described above. In some other implementations, the primary video data can be original HDR video data that can be converted to SDR video as described above. Video output devices and players that do not support the use of recovery maps to obtain an output video according to the described video format can still read and play the primary video track when loading the file.

Video container 600 includes an "rdat" box 610. In some implementations, the payload of the rdat box can be a file (e.g., an MP4 file within the MP4 file 600) that includes several boxes associated with a recovery map track. For example, rdat 610 can include a "ftyp" box 612 that is similar to ftyp box 602 but applies to the rdat box 610. A "moov" box 614 can define timescale, duration, and display characteristics of the recovery map track in the rdat box 610. A "meta" box 616 can include static metadata that applies to all frames of the recovery map track, such as a version number for the recovery map definition in rdat box 610 and/or other static metadata. For example, this box can include a "hdlr" type set to "mdta" to indicate the structure, and an mdta key to an ilst entry for the recovery map track static metadata.

The rdat box 610 includes an "mdat" box 618 that can include a recovery map track that is the payload of the rdat box. In some implementations, the mdat box can also include a time metadata track. The recovery map track can be a video that includes recovery map frames as described herein, which can be applied to associated frames of the primary video data in mdat box 608 to obtain a derived output video. In some implementations, the recovery map track may be stored at a different resolution than the primary video track, and has the same aspect ratio and orientation as the primary video track.

The timed metadata track can be a video that includes a respective set of gainmap rendering parameters associated with each recovery map frame, where the gainmap rendering parameters include instructions or parameters used for applying the associated recovery map values to the corresponding frames of the primary video data to obtain an output video, e.g., to fully recover a high dynamic range of an original video. For example, the gainmap rendering parameters can include the respective range scaling factors associated with the recovery map frames of the recovery map track as described herein, and/or can include other parameters that may be used in some implementations, e.g., one or more particular epsilon values that may be desired in the conversion operation (as described above with reference to Fig. 3), dynamic metadata used in some alternate implementations that may apply to sub-portions of a video, or other parameters that can be used as inputs to the conversion operation in various implementations.

In some implementations, the recovery map track and timed metadata track can be stored in a separate top-level box to prevent video-playing software and devices that are not aware of the described backwards-compatible video format to unintentionally select the recovery map track as the primary video track.

In some implementations, multiple recovery map tracks can be included in mdat box 618, and in some implementations, a respective associated timed metadata track can be stored in mdat box for each of these recovery map tracks. As described above, multiple recovery map tracks can allow one of these tracks to be selected for use to provide an output video having characteristics particular to the selected recovery map track. In some implementations, as described above, a single timed metadata track can be associated and usable with multiple recovery map tracks stored in the video container. In some implementations, one or more recovery map tracks in the video container can be associated with one respective timed metadata track and multiple other recovery map tracks in the video container can be associated with a single timed metadata track. In some implementations, metadata can be stored in mdat box 618 (and/or other box(es) of rdat box 610) that identifies intended usage of a single recovery map track or multiple recovery map tracks that are provided in mdat box 618, similarly as described above for Fig. 2. In some examples, such intended usage can include specifying a range of particular display characteristics suitable for displaying video generated based on a particular recovery map track, e.g., display characteristics such as particular dynamic range, maximum brightness, color gamut, bit depth, color space, etc.

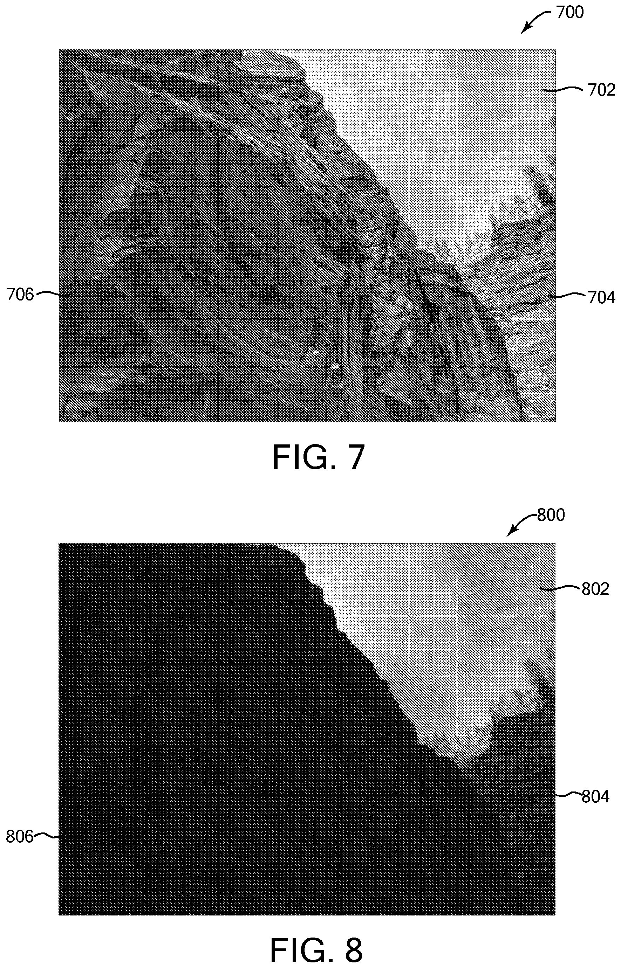

Fig. 7 is an illustration of an example approximation of a video frame 700 that has a high dynamic range (the full dynamic range of the HDR image is not presentable in this representation; e.g., it is an LDR depiction of an HDR scene). For example, HDR frame 700 may have been captured by a camera that is capable of capturing HDR videos and images. In frame 700, the image regions 702, 704, and 706 are shown in detail and the greater dynamic range enables these regions to be portrayed as they naturally appear to the human observer.

Fig. 8 shows an example of a representation of an LDR frame 800 that has a lower dynamic range than the HDR frame 700, such as the low dynamic range of a standard JPEG image. LDR frame 800 depicts the same scene as in images 700 and 800. For example, frame 800 may be an LDR frame of a video captured by a camera. In this example, the sky image region 802 is exposed properly, but the foreground image regions 804 and 806 are shadows that are not fully exposed due to lack of range compression in the frame, thus causing these regions to be too dark and to lose visual detail.

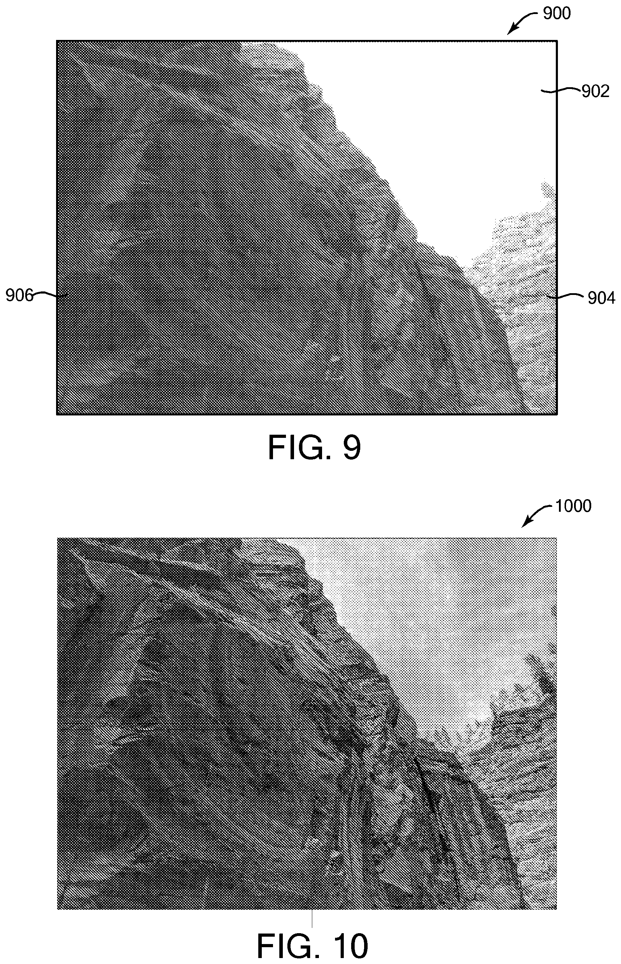

Fig. 9 is another example of a frame 900 that has a lower dynamic range than the HDR frame 700 similarly to LDR frame 800, and depicts the same scene as in frames 700 and 800. For example, frame 900 may be an LDR frame captured by a camera. In this example, due to lack of range compression in the frame, the sky image region 902 is overexposed and thus its detail is washed out, while the foreground image regions 904 and 906 are exposed properly and include appropriate detail.

Fig. 10 is an example of a range-compressed frame 1000. For example, frame 1000 can be locally tone mapped from HDR frame 700. The local tone mapping can be performed using any of a variety of tone mapping techniques. For example, the shadows of frame 800 can be increased in luminance while preserving the contrast of the edges in the image. Thus, while frame 1000 has a lower dynamic range than frame 700 (which is not perceivable in these figures), it can preserve the detail over more of the frame than frame 800 of Fig. 8 and frame 900 of Fig. 9. A range-compressed image such as frame 1000 can be used as the LDR frame in the video format described herein, and can be included in the described image container as an LDR version of a provided HDR frame.

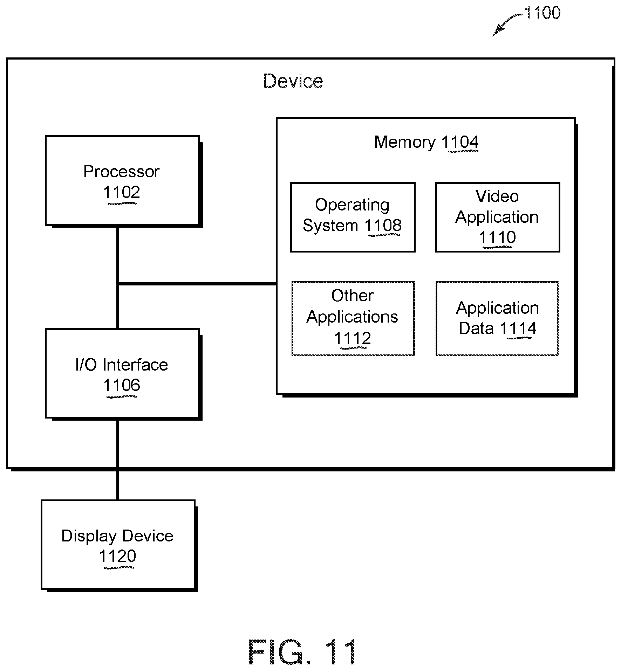

Fig. 11 is a block diagram of an example device 1100 which may be used to implement one or more features described herein. In one example, device 1100 may be used to implement a client device, e.g., any of client devices 120-126 shown in Fig. 1. Alternatively, device 1100 can implement a server device, e.g., server device 104. In some implementations, device 1100 may be used to implement a client device, a server device, or both client and server devices. Device 1100 can be any suitable computer system, server, or other electronic or hardware device as described above.

One or more methods described herein can operate in several environments and platforms, e.g., as a standalone computer program that can be executed on any type of computing device, as a web application having web pages, a program run on a web browser, a mobile application ("app") run on a mobile computing device (e.g., cell phone, smart phone, tablet computer, wearable device (wristwatch, armband, jewelry, headwear, virtual reality goggles or glasses, augmented reality goggles or glasses, head mounted display, etc.), laptop computer, etc.). In one example, a client/server architecture can be used, e.g., a mobile computing device (as a client device) sends user input data to a server device and receives from the server the final output data for output (e.g., for display). In another example, all computations can be performed within the mobile app (and/or other apps) on the mobile computing device. In another example, computations can be split between the mobile computing device and one or more server devices.

In some implementations, device 1100 includes a processor 1102, a memory 1104, and input/output (I/O) interface 1106. Processor 1102 can be one or more processors and/or processing circuits to execute program code and control basic operations of the device 1100. A "processor" includes any suitable hardware system, mechanism or component that processes data, signals or other information. A processor may include a system with a general-purpose central processing unit (CPU) with one or more cores (e.g., in a single-core, dual-core, or multi-core configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality (e.g., one or more hardware image decoders and/or video decoders), a special-purpose processor to implement neural network model-based processing, neural circuits, processors optimized for matrix computations (e.g., matrix multiplication), or other systems. In some implementations, processor 1102 may include one or more co-processors that implement neural-network processing. In some implementations, processor 1102 may be a processor that processes data to produce probabilistic output, e.g., the output produced by processor 1102 may be imprecise or may be accurate within a range from an expected output. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 1104 is typically provided in device 1100 for access by the processor 1102, and may be any suitable processor-readable storage medium, such as random access memory (RAM), read-only memory (ROM), Electrical Erasable Read-only Memory (EEPROM), Flash memory, etc., suitable for storing instructions for execution by the processor, and located separate from processor 1102 and/or integrated therewith. Memory 1104 can store software operating on the server device 1100 by the processor 1102, including an operating system 1108, video application 1110 (e.g., which may be video application 106 of Fig. 1), other applications 1112, and application data 1114. Other applications 1112 may include applications such as a data display engine, web hosting engine, map applications, video display engine, notification engine, social networking engine, media display applications, communication applications, web hosting engines or applications, media sharing applications, etc. In some implementations, the video application 1110 can include instructions that enable processor 1102 to perform functions described herein, e.g., some or all of the methods of Figs. 2-5. In some implementations, images and videos stored in the formats described herein (including recovery maps, recovery map tracks, metadata, metadata tracks, etc.) can be stored as application data 1114 or other data in memory 1104, and/or on other storage devices of one or more other devices in communication with device 1100. In some examples, video application 1110, or other applications stored in memory 1104, can include an image encoding / video encoding and container creation module(s) (e.g., performing methods of Figs. 2-4) and/or an image decoding / video decoding module(s) (e.g., performing the method of Fig. 5), or such modules can be integrated into fewer or a single module or application.

Any software in memory 1104 can alternatively be stored on any other suitable storage location or computer-readable medium. In addition, memory 1104 (and/or other connected storage device(s)) can store one or more messages, one or more taxonomies, electronic encyclopedia, dictionaries, digital maps, thesauruses, knowledge bases, message data, grammars, user preferences, and/or other instructions and data used in the features described herein. Memory 1104 and any other type of storage (magnetic disk, optical disk, magnetic tape, or other tangible media) can be considered "storage" or "storage devices."

I/O interface 1106 can provide functions to enable interfacing the server device 1100 with other systems and devices. Interfaced devices can be included as part of the device 1100 or can be separate and communicate with the device 1100. For example, network communication devices, storage devices (e.g., memory and/or database), and input/output devices can communicate via I/O interface 1106. In some implementations, the I/O interface can connect to interface devices such as input devices (keyboard, pointing device, touchscreen, microphone, camera, scanner, sensors, etc.) and/or output devices (display devices, speaker devices, printers, motors, etc.).

Some examples of interfaced devices that can connect to I/O interface 1106 can include one or more display devices 1120 that can be used to display content, e.g., images, video, and/or a user interface of an application as described herein. Display device 1120 can be connected to device 1100 via local connections (e.g., display bus) and/or via networked connections and can be any suitable display device. Display device 1120 can include any suitable display device such as an LCD, LED, or plasma display screen, CRT, television, monitor, touchscreen, 3-D display screen, or other visual display device. Display device 1120 may also act as an input device, e.g., a touchscreen input device. For example, display device 1120 can be a flat display screen provided on a mobile device, multiple display screens provided in glasses or a headset device, or a monitor screen for a computer device.

The I/O interface 1106 can interface to other input and output devices. Some examples include one or more cameras which can capture images and videos and/or detect gestures. Some implementations can provide a microphone for capturing sound (e.g., as a part of captured videos, voice commands, etc.), a radar or other sensors for detecting gestures, audio speaker devices for outputting sound, or other input and output devices.

For ease of illustration, Fig. 11 shows one block for each of processor 1102, memory 1104, I/O interface 1106, and software blocks 1108-1114. These blocks may represent one or more processors or processing circuitries, operating systems, memories, I/O interfaces, applications, and/or software modules. In other implementations, device 1100 may not have all of the components shown and/or may have other elements including other types of elements instead of, or in addition to, those shown herein. While some components are described as performing blocks and operations as described in some implementations herein, any suitable component or combination of components of environment 100, device 1100, similar systems, or any suitable processor or processors associated with such a system, may perform the blocks and operations described.

Methods described herein can be implemented by computer program instructions or code, which can be executed on a computer. For example, the code can be implemented by one or more digital processors (e.g., microprocessors or other processing circuitry) and can be stored on a computer program product including a non-transitory computer-readable medium (e.g., storage medium), such as a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g. Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating systems.

Although the description has been described with respect to particular implementations thereof, these particular implementations are merely illustrative, and not restrictive. Concepts illustrated in the examples may be applied to other examples and implementations.

Further to the descriptions above, a user may be provided with controls allowing the user to make an election as to both if and when systems, programs, or features described herein may enable collection of user information (e.g., information about a user's social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

Note that the functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, operations, or computations may be presented in a specific order, the order may be changed in different particular implementations. In some implementations, multiple steps or operations shown as sequential in this specification may be performed at the same time.

## Claims

1. A computer-implemented method comprising:
obtaining (210) a first video including a plurality of first frames, wherein each of the first frames depicts a respective scene, the first frames having a first dynamic range;
obtaining (212) a second video including a plurality of second frames, wherein each of the second frames depicts the respective scene of a corresponding frame of the first frames, the second frames having a second dynamic range that is lower than the first dynamic range;
generating (214) a recovery map track, wherein generating the recovery map track includes, for each first frame of the first frames and corresponding second frame of the second frames:
generating a recovery map frame based on the first frame and the corresponding second frame, wherein the recovery map frame encodes gains in luminances between portions of the first frame and corresponding portions of the corresponding second frame such that applying the gains to luminances of individual pixels of the first frame results in pixels corresponding to the corresponding second frame; and
providing (218) the first video and the recovery map track in a video container, wherein the video container is readable to display a derived video based on applying the recovery map track to the first video, wherein the derived video includes a plurality of derived frames that have a dynamic range that is lower than the first dynamic range.

2. The method of claim 1, further comprising generating a metadata track that includes respective metadata frames related to corresponding recovery map frames, wherein providing the first video and the recovery map track in the video container includes providing the metadata track in the video container.

3. The method of claim 2, wherein the gains in luminances are scaled by a range scaling factor that includes a ratio of a maximum luminance of the corresponding second frame to a maximum luminance of the first frame,
wherein the respective metadata frames in the metadata track include a respective range scaling factor associated with an associated recovery map frame of the recovery map track.

4. The method of any of the preceding claims, wherein:
the gains in luminances are scaled by a range scaling factor that is a ratio of a maximum luminance of the corresponding second frame to a maximum luminance of the first frame; and/or
generating each recovery map frame is based on: $recovery \left(x, y\right) = log \left(pixel_gain\left(x, y\right)\right) / log \left(range scaling factor\right) ,$ wherein recovery(x,y) is the recovery map frame for pixel position (x, y) of the corresponding second frame, and pixel_gain(x,y) is a ratio of luminances at the position (x, y) of the corresponding second frame to the first frame; and/or
generating each recovery map frame includes encoding the recovery map frame into a bilateral grid; and/or
providing the recovery map track in the video container includes encoding the recovery map track to have a different resolution than the first video and have the same aspect ratio as an aspect ratio of the first video; and/or
the video container is readable to:
display the first video by a first display device capable of displaying the first dynamic range; and
display the derived video by a second display device only capable of displaying a dynamic range lower than the first dynamic range; and/or
obtaining the second video comprises performing range compression on the first video.

5. The method of any of the preceding claims, further comprising:
obtaining the video container;
determining to display the derived video by a second display device;
scaling a plurality of pixel luminances of the first frames of the first video in the video container based on a particular luminance output of the second display device and based on the corresponding recovery map frames to obtain the derived frames; and
after the scaling, causing the derived frames to be displayed by the second display device as output frames that have a different dynamic range than the first frame.

6. The method of claim 5, further comprising determining a maximum luminance display capability of the second display device,
wherein scaling the plurality of pixel luminances includes increasing luminances of highlights in the first video to a luminance level that is less than or equal to the maximum luminance display capability.

7. The method of any of the preceding claims, wherein generating the recovery map track includes generating multiple recovery map tracks and providing the recovery map track in the video container includes providing the multiple recovery map tracks in the video container,
wherein each of the multiple recovery map tracks encodes gains in luminances between portions of the first frame and corresponding portions of the corresponding second frame, and wherein each of the multiple recovery map tracks is readable from the video container to cause a respective derived video to be displayed, each respective derived video having one or more characteristics that differ from each other.

8. The method of claim 7, wherein the one or more characteristics of the respective derived videos that differ from each other include a dynamic range, wherein a greater dynamic range is provided from applying a first recovery map track of the multiple recovery map tracks, and a lower dynamic range is provided from applying a second recovery map track of the multiple recovery map tracks.

9. A computer-implemented method comprising:
obtaining portions of a video container, the portions including:
a first video including a plurality of first frames, wherein each of the first frames depicts a respective scene, the first frames having a first dynamic range; and
a recovery map track that includes a plurality of recovery map frames, wherein each recovery map frame corresponds to a respective frame of the first frames, each recovery map frame encoding luminance gains of pixels of the corresponding first frame that are scaled by an associated range scaling factor that is a ratio of a maximum luminance of a corresponding second frame to a maximum luminance of the corresponding first frame, wherein the corresponding second frame depicts the respective scene of the first frame and has a second dynamic range that is lower than the first dynamic range, wherein each recovery map frame encodes gains in luminances between portions of the first frame and corresponding portions of the corresponding second frame such that applying the gains to luminances of individual pixels of the first frame results in pixels corresponding to the corresponding second frame;
determining whether to display one of: the first video or a derived video that includes a plurality of derived frames having a dynamic range lower than the first dynamic range;
in response to determining to display the first video:
causing at least a portion of the first video to be displayed by a display device; and
in response to determining to display the derived video:
applying the gains of the recovery map frames of the recovery map track to luminances of pixels of the corresponding first frames to determine respective corresponding pixel values of corresponding derived frames of the derived video; and
causing at least a portion of the derived video to be displayed by the display device.

10. The method of claim 9, wherein:
the video container includes a metadata track that includes respective range scaling factors that are associated with the recovery map frames of the recovery map track, wherein each of the respective range scaling factors is used to scale the luminance gains of pixels of the corresponding first frame, the luminance gains provided by the associated recovery map frame; and/or
the display device is capable of displaying a display dynamic range that is different than the first dynamic range, and wherein applying the gains of the recovery map frames includes adapting the luminances of the pixel values of the corresponding derived frames to the display dynamic range of the display device; and/or
the dynamic range of the derived frames has a maximum luminance that is the lesser of:
a maximum luminance of the display device, and
a maximum luminance of the second dynamic range of the second frames used in generation of the recovery map frames; and/or
each recovery map frame is encoded in a bilateral grid, and further comprising decoding the recovery map frames from the bilateral grid; and/or
the method further comprises, in response to determining to display the derived video, decoding additional information from the video container, the additional information including the range scaling factor; and/or
the method further comprises decoding the recovery map track from a block included in the video container that is separate from the first video.

11. The method of any of claims 9 or 10, wherein in response to determining to display the derived video, applying the gains of the recovery map frames includes:
scaling the luminances of the first frames based on a particular luminance output of the display device and based on the corresponding recovery map frames.

12. The method of claim 11, wherein the scaling of the luminances of the first frames is performed based on: $derived_frame \left(x, y\right) = first_frame \left(x, y\right) + log \left(display_factor\right) * recovery \left(x, y\right)$ wherein derived_frame(x,y) is a logarithmic space version of the corresponding derived frame, first_frame(x,y) is a logarithmic space version of the first frame recovered from the video container, display_factor is a minimum of the range scaling factor and a maximum display luminance of the display device, recovery(x,y) is the recovery map for pixel position (x, y) of the first frame, and the range scaling factor is a ratio of a maximum luminance of the corresponding second frame to a maximum luminance of the first frame.

13. The method of any of claims 9 to 12, wherein:
determining whether to display one of: the first video or the derived video is performed by a server device, the determination based on a display dynamic range of the display device that is included in or coupled to a client device;
causing the at least the portion of the first video to be displayed by the display device includes streaming the first video from the server device to the client device such that the client device displays the first video; and
causing the at least the portion of the derived video to be displayed by the display device includes streaming the derived video from the server device to the client device such that the client device displays the derived video.

14. The method of any of claims 9 to 12, wherein:
obtaining the portions of the video container includes receiving the first video and the recovery map track by a client device from a server device;
determining whether to display one of: the first video or the derived video is performed by the client device, the determination based on a display dynamic range of the display device that is included in or coupled to the client device;
causing the at least the portion of the first video to be displayed by the display device is performed by the client device; and
applying the gains of the recovery map frames and causing the at least the portion of the derived video to be displayed by the display device is performed by the client device.

15. A system (1100) comprising:
a processor (1102); and
a memory (1104) coupled to the processor, with instructions stored thereon that, when executed by the processor, cause the processor to perform operations comprising:
obtaining a video container that includes:
a first video including a plurality of first frames, the first frames having a first dynamic range; and
a recovery map track that includes a plurality of recovery map frames, wherein each recovery map frame corresponds to a respective frame of the first frames, each recovery map frame encoding luminance gains of pixels of the corresponding first frame, wherein each recovery map frame encodes gains in luminances between portions of the first frame and corresponding portions of a corresponding second frame such that applying the gains to luminances of individual pixels of the first frame results in pixels corresponding to the corresponding second frame;
determining whether to display one of: the first video or a derived video that includes a plurality of derived frames corresponding to the first frames in depicted subject matter and having a second dynamic range that is lower than the first dynamic range;
in response to determining to display the first video:
causing at least a portion of the first video to be displayed by a first display device; and
in response to determining to display the derived video:
applying the gains of the recovery map frames of the recovery map track to luminances of pixels of the corresponding first frames to determine respective corresponding pixel values of corresponding derived frames of the derived video, wherein applying the gains includes scaling the luminances of the corresponding first frames based on a particular luminance output of a second display device and based on the recovery map frames; and
causing at least a portion of the derived video to be displayed by the second display device.

## Patentansprüche

1. Computerimplementiertes Verfahren, umfassend:
Erhalten (210) eines ersten Videos, das eine Mehrzahl von ersten Bildern beinhaltet, wobei jedes der ersten Bilder eine jeweilige Szene darstellt, wobei die ersten Bilder einen ersten Dynamikbereich aufweisen;
Erhalten (212) eines zweiten Videos, das eine Mehrzahl von zweiten Bildern beinhaltet, wobei jedes der zweiten Bilder die jeweilige Szene eines entsprechenden Bildes der ersten Bilder darstellt, wobei die zweiten Bilder einen zweiten Dynamikbereich aufweisen, der niedriger als der erste Dynamikbereich ist;
Erzeugen (214) einer Wiederherstellungskartenspur, wobei das Erzeugen der Wiederherstellungskartenspur für jedes erste Bild der ersten Bilder und ein entsprechendes zweites Bild der zweiten Bilder beinhaltet:
Erzeugen eines Wiederherstellungskartenbildes auf der Grundlage des ersten Bildes und des entsprechenden zweiten Bildes, wobei das Wiederherstellungskartenbild Verstärkungen der Leuchtdichten zwischen Abschnitten des ersten Bildes und entsprechenden Abschnitten des entsprechenden zweiten Bildes codiert, sodass ein Anwenden der Verstärkungen auf Leuchtdichten einzelner Pixel des ersten Bildes zu Pixeln führt, die dem entsprechenden zweiten Bild entsprechen; und
Bereitstellen (218) des ersten Videos und der Wiederherstellungskartenspur in einem Videocontainer, wobei der Videocontainer lesbar ist, um ein abgeleitetes Video auf der Grundlage eines Anwendens der Wiederherstellungskartenspur auf das erste Video anzuzeigen, wobei das abgeleitete Video eine Mehrzahl von abgeleiteten Bildern beinhaltet, die einen Dynamikbereich aufweisen, der niedriger als der erste Dynamikbereich ist.

2. Verfahren nach Anspruch 1, ferner umfassend das Erzeugen einer Metadatenspur, die jeweilige Metadatenbilder beinhaltet, die sich auf entsprechende Wiederherstellungskartenbilder beziehen, wobei das Bereitstellen des ersten Videos und der Wiederherstellungskartenspur in dem Videocontainer das Bereitstellen der Metadatenspur in dem Videocontainer beinhaltet.

3. Verfahren nach Anspruch 2, wobei die Verstärkungen der Leuchtdichten durch einen Bereichsskalierungsfaktor skaliert werden, der ein Verhältnis einer maximalen Leuchtdichte des entsprechenden zweiten Bildes zu einer maximalen Leuchtdichte des ersten Bildes beinhaltet,
wobei die jeweiligen Metadatenbilder in der Metadatenspur einen jeweiligen Bereichsskalierungsfaktor beinhalten, der einem zugehörigen Wiederherstellungskartenbild der Wiederherstellungskartenspur zugeordnet ist.

4. Verfahren nach einem der vorhergehenden Ansprüche, wobei:
die Verstärkungen der Leuchtdichten durch einen Bereichsskalierungsfaktor skaliert werden, der ein Verhältnis einer maximalen Leuchtdichte des entsprechenden zweiten Bildes zu einer maximalen Leuchtdichte des ersten Bildes ist; und/oder
das Erzeugen jedes Wiederherstellungskartenbildes auf Folgendem basiert: $recovery \left(x, y\right) = log \left(pixel_gain\left(x, y\right)\right) / log \left(range scaling factor\right) ,$
wobei recovery(x,y) das Wiederherstellungskartenbild für die Pixelposition (x, y) des entsprechenden zweiten Bildes ist und pixel_gain(x,y) ein Verhältnis der Leuchtdichten an der Position (x, y) des entsprechenden zweiten Bildes zu dem ersten Bild ist; und/oder
das Erzeugen jedes Wiederherstellungskartenbildes ein Codieren des Wiederherstellungskartenbildes in ein Bilateral Grid beinhaltet; und/oder
das Bereitstellen der Wiederherstellungskartenspur in dem Videocontainer ein Codieren der Wiederherstellungskartenspur beinhaltet, sodass sie eine andere Auflösung als das erste Video und dasselbe Seitenverhältnis wie ein Seitenverhältnis des ersten Videos aufweist; und/oder der Videocontainer lesbar ist, um:
das erste Video durch eine erste Anzeigevorrichtung anzuzeigen, die in der Lage ist, den ersten Dynamikbereich anzuzeigen; und
das abgeleitete Video durch eine zweite Anzeigevorrichtung anzuzeigen, die nur in der Lage ist, einen Dynamikbereich anzuzeigen, der niedriger als der erste Dynamikbereich ist; und/oder das Erhalten des zweiten Videos ein Durchführen einer Bereichskompression an dem ersten Video umfasst.

5. Verfahren nach einem der vorhergehenden Ansprüche, ferner umfassend:
Erhalten des Videocontainers;
Bestimmen, das abgeleitete Video durch eine zweite Anzeigevorrichtung anzuzeigen;
Skalieren einer Mehrzahl von Pixelleuchtdichten der ersten Bilder des ersten Videos in dem Videocontainer auf der Grundlage einer bestimmten Leuchtdichteausgabe der zweiten Anzeigevorrichtung und auf der Grundlage der entsprechenden Wiederherstellungskartenbilder, um die abgeleiteten Bilder zu erhalten; und
nach dem Skalieren, Bewirken, dass die abgeleiteten Bilder durch die zweite Anzeigevorrichtung als Ausgabebilder angezeigt werden, die einen anderen Dynamikbereich als das erste Bild aufweisen.

6. Verfahren nach Anspruch 5, ferner umfassend das Bestimmen einer maximalen Leuchtdichte-Anzeigefähigkeit der zweiten Anzeigevorrichtung,
wobei das Skalieren der Mehrzahl von Pixelleuchtdichten ein Erhöhen von Leuchtdichten von Lichtern in dem ersten Video auf ein Leuchtdichteniveau beinhaltet, das kleiner oder gleich der maximalen Leuchtdichte-Anzeigefähigkeit ist.

7. Verfahren nach einem der vorhergehenden Ansprüche, wobei das Erzeugen der Wiederherstellungskartenspur ein Erzeugen mehrerer Wiederherstellungskartenspuren beinhaltet und das Bereitstellen der Wiederherstellungskartenspur in dem Videocontainer ein Bereitstellen der mehreren Wiederherstellungskartenspuren in dem Videocontainer beinhaltet, wobei jede der mehreren Wiederherstellungskartenspuren Verstärkungen der Leuchtdichten zwischen Abschnitten des ersten Bildes und entsprechenden Abschnitten des entsprechenden zweiten Bildes codiert und wobei jede der mehreren Wiederherstellungskartenspuren aus dem Videocontainer lesbar ist, um zu bewirken, dass ein jeweiliges abgeleitetes Video angezeigt wird, wobei jedes jeweilige abgeleitete Video eine oder mehrere Eigenschaften aufweist, die sich voneinander unterscheiden.

8. Verfahren nach Anspruch 7, wobei die eine oder die mehreren Eigenschaften der jeweiligen abgeleiteten Videos, die sich voneinander unterscheiden, einen Dynamikbereich beinhalten, wobei ein größerer Dynamikbereich durch ein Anwenden einer ersten Wiederherstellungskartenspur der mehreren Wiederherstellungskartenspuren bereitgestellt wird und ein niedrigerer Dynamikbereich durch ein Anwenden einer zweiten Wiederherstellungskartenspur der mehreren Wiederherstellungskartenspuren bereitgestellt wird.

9. Computerimplementiertes Verfahren, umfassend:
Erhalten von Abschnitten eines Videocontainers, wobei die Abschnitte beinhalten:
ein erstes Video, das eine Mehrzahl von ersten Bildern beinhaltet, wobei jedes der ersten Bilder eine jeweilige Szene darstellt, wobei die ersten Bilder einen ersten Dynamikbereich aufweisen; und
eine Wiederherstellungskartenspur, die eine Mehrzahl von Wiederherstellungskartenbildern beinhaltet, wobei jedes Wiederherstellungskartenbild einem jeweiligen Bild der ersten Bilder entspricht, wobei jedes Wiederherstellungskartenbild Leuchtdichteverstärkungen von Pixeln des entsprechenden ersten Bildes codiert, die durch einen zugehörigen Bereichsskalierungsfaktor skaliert werden, der ein Verhältnis einer maximalen Leuchtdichte eines entsprechenden zweiten Bildes zu einer maximalen Leuchtdichte des entsprechenden ersten Bildes ist, wobei das entsprechende zweite Bild die jeweilige Szene des ersten Bildes darstellt und einen zweiten Dynamikbereich aufweist, der niedriger als der erste Dynamikbereich ist, wobei jedes Wiederherstellungskartenbild Verstärkungen der Leuchtdichten zwischen Abschnitten des ersten Bildes und entsprechenden Abschnitten des entsprechenden zweiten Bildes codiert, sodass ein Anwenden der Verstärkungen auf Leuchtdichten einzelner Pixel des ersten Bildes zu Pixeln führt, die dem entsprechenden zweiten Bild entsprechen;
Bestimmen, ob eines von Folgendem angezeigt werden soll: das erste Video oder ein abgeleitetes Video, das eine Mehrzahl von abgeleiteten Bildern beinhaltet, die einen Dynamikbereich aufweisen, der niedriger als der erste Dynamikbereich ist;
als Reaktion auf das Bestimmen, das erste Video anzuzeigen:
Bewirken, dass zumindest ein Abschnitt des ersten Videos durch eine Anzeigevorrichtung angezeigt wird; und
als Reaktion auf das Bestimmen, das abgeleitete Video anzuzeigen:
Anwenden der Verstärkungen der Wiederherstellungskartenbilder der Wiederherstellungskartenspur auf Leuchtdichten von Pixeln der entsprechenden ersten Bilder, um jeweilige entsprechende Pixelwerte entsprechender abgeleiteter Bilder des abgeleiteten Videos zu bestimmen; und
Bewirken, dass zumindest ein Abschnitt des abgeleiteten Videos durch die Anzeigevorrichtung angezeigt wird.

10. Verfahren nach Anspruch 9, wobei:
der Videocontainer eine Metadatenspur umfasst, die jeweilige Bereichsskalierungsfaktoren umfasst, die den Wiederherstellungskartenbildern der Wiederherstellungskartenspur zugeordnet sind, wobei jeder der jeweiligen Bereichsskalierungsfaktoren verwendet wird, um die Leuchtdichteverstärkungen von Pixeln des entsprechenden ersten Bildes zu skalieren, wobei die Leuchtdichteverstärkungen durch das zugehörige Wiederherstellungskartenbild bereitgestellt werden; und/oder
die Anzeigevorrichtung in der Lage ist, einen Anzeige-Dynamikbereich anzuzeigen, der sich von dem ersten Dynamikbereich unterscheidet, und wobei das Anwenden der Verstärkungen der Wiederherstellungskartenbilder ein Anpassen der Leuchtdichten der Pixelwerte der entsprechenden abgeleiteten Bilder an den Anzeige-Dynamikbereich der Anzeigevorrichtung umfasst; und/oder
der Dynamikbereich der abgeleiteten Bilder eine maximale Leuchtdichte aufweist, die der kleinere Wert von Folgendem ist:
einer maximalen Leuchtdichte der Anzeigevorrichtung, und
einer maximalen Leuchtdichte des zweiten Dynamikbereichs der zweiten Bilder, die bei der Erzeugung der Wiederherstellungskartenbilder verwendet werden; und/oder
jedes Wiederherstellungskartenbild in einem Bilateral Grid codiert ist, und ferner umfassend ein Decodieren der Wiederherstellungskartenbilder aus dem Bilateral Grid; und/oder
das Verfahren ferner umfasst, als Reaktion auf das Bestimmen, das abgeleitete Video anzuzeigen, zusätzliche Informationen aus dem Videocontainer zu decodieren, wobei die zusätzlichen Informationen den Bereichsskalierungsfaktor umfassen; und/oder
das Verfahren ferner ein Decodieren der Wiederherstellungskartenspur aus einem Block umfasst, der in dem Videocontainer enthalten und von dem ersten Video getrennt ist.

11. Verfahren nach Anspruch 9 oder 10, wobei als Reaktion auf das Bestimmen, das abgeleitete Video anzuzeigen, das Anwenden der Verstärkungen der Wiederherstellungskartenbilder umfasst:
Skalieren der Leuchtdichten der ersten Bilder auf der Grundlage einer bestimmten Leuchtdichteausgabe der Anzeigevorrichtung und auf der Grundlage der entsprechenden Wiederherstellungskartenbilder.

12. Verfahren nach Anspruch 11, wobei das Skalieren der Leuchtdichten der ersten Bilder auf der Grundlage von Folgendem durchgeführt wird: $derived_frame \left(x, y\right) = first_frame \left(x, y\right) + log \left(display_factor\right) * recovery \left(x, y\right)$ wobei derived_frame(x,y) eine Version des entsprechenden abgeleiteten Bildes im logarithmischen Raum ist, first_frame(x,y) eine Version des aus dem Videocontainer wiederhergestellten ersten Bildes im logarithmischen Raum ist, display_factor ein Minimum des Bereichsskalierungsfaktors und einer maximalen Anzeigeleuchtdichte der Anzeigevorrichtung ist, recovery(x,y) die Wiederherstellungskarte für die Pixelposition (x, y) des ersten Bildes ist und der Bereichsskalierungsfaktor ein Verhältnis einer maximalen Leuchtdichte des entsprechenden zweiten Bildes zu einer maximalen Leuchtdichte des ersten Bildes ist.

13. Verfahren nach einem der Ansprüche 9-12, wobei:
das Bestimmen, ob eines von Folgendem angezeigt werden soll: das erste Video oder das abgeleitete Video, durch eine Servervorrichtung durchgeführt wird, wobei das Bestimmen auf einem Anzeige-Dynamikbereich der Anzeigevorrichtung basiert, die in einer Client-Vorrichtung enthalten oder mit dieser gekoppelt ist;
das Bewirken, dass der zumindest der Abschnitt des ersten Videos durch die Anzeigevorrichtung angezeigt wird, ein Streamen des ersten Videos von der Servervorrichtung zu der Client-Vorrichtung umfasst, sodass die Client-Vorrichtung das erste Video anzeigt; und
das Bewirken, dass der zumindest der Abschnitt des abgeleiteten Videos durch die Anzeigevorrichtung angezeigt wird, ein Streamen des abgeleiteten Videos von der Servervorrichtung zu der Client-Vorrichtung umfasst, sodass die Client-Vorrichtung das abgeleitete Video anzeigt.

14. Verfahren nach einem der Ansprüche 9-12, wobei:
das Erhalten der Abschnitte des Videocontainers ein Empfangen des ersten Videos und der Wiederherstellungskartenspur durch eine Client-Vorrichtung von einer Servervorrichtung umfasst;
das Bestimmen, ob eines von Folgendem angezeigt werden soll: das erste Video oder das abgeleitete Video, durch die Client-Vorrichtung durchgeführt wird, wobei das Bestimmen auf einem Anzeige-Dynamikbereich der Anzeigevorrichtung basiert, die in der Client-Vorrichtung enthalten oder mit dieser gekoppelt ist;
das Bewirken, dass der zumindest der Abschnitt des ersten Videos durch die Anzeigevorrichtung angezeigt wird, durch die Client-Vorrichtung durchgeführt wird; und
das Anwenden der Verstärkungen der Wiederherstellungskartenbilder und das Bewirken, dass der zumindest der Abschnitt des abgeleiteten Videos durch die Anzeigevorrichtung angezeigt wird, durch die Client-Vorrichtung durchgeführt werden.

15. System (1100), umfassend:
einen Prozessor (1102); und
einen Speicher (1104), der mit dem Prozessor gekoppelt ist, wobei darauf Anweisungen gespeichert sind, die bei Ausführung durch den Prozessor den Prozessor veranlassen, Operationen durchzuführen, umfassend:
Erhalten eines Videocontainers, der umfasst:
ein erstes Video, das eine Mehrzahl von ersten Bildern umfasst, wobei die ersten Bilder einen ersten Dynamikbereich aufweisen; und
eine Wiederherstellungskartenspur, die eine Mehrzahl von Wiederherstellungskartenbildern umfasst, wobei jedes Wiederherstellungskartenbild einem jeweiligen Bild der ersten Bilder entspricht, wobei jedes Wiederherstellungskartenbild Leuchtdichteverstärkungen von Pixeln des entsprechenden ersten Bildes codiert, wobei jedes Wiederherstellungskartenbild Verstärkungen der Leuchtdichten zwischen Abschnitten des ersten Bildes und entsprechenden Abschnitten eines entsprechenden zweiten Bildes codiert, sodass ein Anwenden der Verstärkungen auf Leuchtdichten einzelner Pixel des ersten Bildes zu Pixeln führt, die dem entsprechenden zweiten Bild entsprechen;
Bestimmen, ob eines von Folgendem angezeigt werden soll: das erste Video oder ein abgeleitetes Video, das eine Mehrzahl von abgeleiteten Bildern umfasst, die den ersten Bildern im dargestellten Gegenstand entsprechen und einen zweiten Dynamikbereich aufweisen, der niedriger als der erste Dynamikbereich ist;
als Reaktion auf das Bestimmen, das erste Video anzuzeigen:
Bewirken, dass zumindest ein Abschnitt des ersten Videos durch eine erste Anzeigevorrichtung angezeigt wird; und
als Reaktion auf das Bestimmen, das abgeleitete Video anzuzeigen:
Anwenden der Verstärkungen der Wiederherstellungskartenbilder der Wiederherstellungskartenspur auf Leuchtdichten von Pixeln der entsprechenden ersten Bilder, um jeweilige entsprechende Pixelwerte entsprechender abgeleiteter Bilder des abgeleiteten Videos zu bestimmen, wobei das Anwenden der Verstärkungen ein Skalieren der Leuchtdichten der entsprechenden ersten Bilder auf der Grundlage einer bestimmten Leuchtdichteausgabe einer zweiten Anzeigevorrichtung und auf der Grundlage der Wiederherstellungskartenbilder beinhaltet; und
Bewirken, dass zumindest ein Abschnitt des abgeleiteten Videos durch die zweite Anzeigevorrichtung angezeigt wird.

## Revendications

1. Procédé mis en œuvre par ordinateur comprenant :
l'obtention (210) d'une première vidéo comportant une pluralité de premières trames, dans lequel chacune des premières trames représente une scène respective, les premières images ayant une première plage dynamique ;
l'obtention (212) d'une seconde vidéo comportant une pluralité de secondes trames, dans lequel chacune des secondes trames représente la scène respective d'une trame correspondante des premières trames, les secondes trames ayant une seconde plage dynamique qui est inférieure à la première plage dynamique ;
la génération (214) d'une piste de carte de récupération, dans lequel la génération de la piste de carte de récupération comporte, pour chaque première trame des premières trames et une seconde trame correspondante des secondes trames :
la génération d'une trame de carte de récupération sur la base de la première trame et de la seconde trame correspondante, dans lequel la trame de carte de récupération code des gains de luminance entre des portions de la première trame et des portions correspondantes de la seconde trame correspondante de sorte que l'application des gains aux luminances de pixels individuels de la première trame donne des pixels correspondant à la seconde trame correspondante ; et
la fourniture (218) de la première vidéo et de la piste de carte de récupération dans un conteneur vidéo, dans lequel le conteneur vidéo est lisible pour afficher une vidéo dérivée sur la base de l'application de la piste de carte de récupération à la première vidéo, dans lequel la vidéo dérivée comporte une pluralité de trames dérivées qui ont une plage dynamique qui est inférieure à la première plage dynamique.

2. Procédé selon la revendication 1, comportant en outre la génération d'une piste de métadonnées qui comporte des trames de métadonnées respectives relatives à des trames de cartes de récupération correspondantes, dans lequel la fourniture de la première vidéo et de la piste de carte de récupération dans le conteneur vidéo comporte la fourniture de la piste de métadonnées dans le conteneur vidéo.

3. Procédé selon la revendication 2, dans lequel les gains de luminance sont mis à l'échelle par un facteur de mise à l'échelle de plage qui comporte un rapport entre une luminance maximale de la seconde trame correspondante et une luminance maximale de la première trame,
dans lequel les trames de métadonnées respectives dans la piste de métadonnées comportent un facteur de mise à l'échelle de plage respectif associé à une trame de carte de récupération associée de la piste de carte de récupération.

4. Procédé selon l'une quelconque des revendications précédentes, dans lequel :
les gains de luminance sont mis à l'échelle par un facteur de mise à l'échelle de plage qui est un rapport entre une luminance maximale de la seconde trame correspondante et une luminance maximale de la première trame ; et/ou
la génération de chaque trame de carte de récupération est sur la base de : $recovery \left(x, y\right) = log \left(pixel_gain\left(x, y\right)\right) / log \left(range scaling factor\right) ,$
dans lequel recovery(x,y) est la trame de carte de récupération pour la position de pixel (x, y) de la seconde trame correspondante, et pixel_gain(x,y) est un rapport de luminances au niveau de la position (x, y) de la seconde trame correspondante à la première trame ; et/ou
la génération de chaque trame de carte de récupération comporte le codage de la trame de carte de récupération dans une grille bilatérale ; et/ou
la fourniture de la piste de carte de récupération dans le conteneur vidéo comporte le codage de la piste de carte de récupération de manière à avoir une résolution différente de celle de la première vidéo et à avoir le même rapport d'aspect qu'un rapport d'aspect de la première vidéo ; et/ou
le conteneur vidéo est lisible pour :
afficher la première vidéo au moyen d'un premier dispositif d'affichage capable d'afficher la première plage dynamique ; et
afficher la vidéo dérivée au moyen d'un second dispositif d'affichage qui est uniquement capable d'afficher une plage dynamique inférieure à la première plage dynamique ; et/ou
l'obtention de la seconde vidéo comprend la réalisation d'une compression de plage sur la première vidéo.

5. Procédé selon l'une quelconque des revendications précédentes, comprenant en outre :
l'obtention du conteneur vidéo ;
la détermination d'afficher la vidéo dérivée au moyen d'un second dispositif d'affichage ;
la mise à l'échelle d'une pluralité de luminances de pixels des premières trames de la première vidéo dans le conteneur vidéo sur la base d'une sortie de luminance particulière du second dispositif d'affichage et sur la base des trames de cartes de récupération correspondantes pour obtenir les trames dérivées ; et
après la mise à l'échelle, le fait d'entraîner l'affichage des trames dérivées par le second dispositif d'affichage en tant que trames de sortie qui ont une plage dynamique différente de celle de la première trame.

6. Procédé selon la revendication 5, comprenant en outre la détermination d'une capacité d'affichage de luminance maximale du second dispositif d'affichage,
dans lequel la mise à l'échelle de la pluralité de luminances de pixels comporte l'augmentation de luminances de points saillants dans la première vidéo jusqu'à un niveau de luminance qui est inférieur ou égal à la capacité d'affichage de luminance maximale.

7. Procédé selon l'une quelconque des revendications précédentes, dans lequel la génération de la piste de carte de récupération comporte la génération de multiples pistes de cartes de récupération et la fourniture de la piste de carte de récupération dans le conteneur vidéo comporte la fourniture des multiples pistes de cartes de récupération dans le conteneur vidéo, dans lequel chacune des multiples pistes de cartes de récupération code des gains de luminance entre des portions de la première trame et des portions correspondantes de la seconde trame correspondante, et dans lequel chacune des multiples pistes de cartes de récupération est lisible à partir du conteneur vidéo pour entraîner l'affichage d'une vidéo dérivée respective, chaque vidéo dérivée respective ayant une ou plusieurs caractéristiques qui diffèrent les unes des autres.

8. Procédé selon la revendication 7, dans lequel les une ou plusieurs caractéristiques des vidéos dérivées respectives qui diffèrent les unes des autres comportent une plage dynamique, dans lequel une plage dynamique supérieure est fournie par l'application d'une première piste de carte de récupération des multiples pistes de cartes de récupération, et une plage dynamique inférieure est fournie par l'application d'une seconde piste de carte de récupération des multiples pistes de cartes de récupération.

9. Procédé mis en œuvre par ordinateur comprenant :
l'obtention de portions d'un conteneur vidéo, les portions comportant :
une première vidéo comportant une pluralité de premières trames, dans lequel chacune des premières trames représente une scène respective, les premières images ayant une première plage dynamique ; et
une piste de carte de récupération qui comporte une pluralité de trames de cartes de récupération, dans lequel chaque trame de carte de récupération correspond à une trame respective des premières trames, chaque trame de carte de récupération codant des gains de luminance de pixels de la première trame correspondante qui sont mis à l'échelle par un facteur de mise à l'échelle de plage associé qui est un rapport entre une luminance maximale d'une seconde trame correspondante et une luminance maximale de la première trame correspondante, dans lequel la seconde trame correspondante représente la scène respective de la première trame et a une seconde plage dynamique qui est inférieure à la première plage dynamique, dans lequel chaque trame de carte de récupération code des gains de luminance entre des portions de la première trame et des portions correspondantes de la seconde trame correspondante de sorte que l'application des gains aux luminances de pixels individuels de la première trame donne des pixels correspondant à la seconde trame correspondante ;
le fait de déterminer s'il faut afficher l'une de la première vidéo ou d'une vidéo dérivée qui comporte une pluralité de trames dérivées ayant une plage dynamique inférieure à la première plage dynamique ;
en réponse à la détermination d'afficher la première vidéo :
le fait d'entraîner l'affichage d'au moins une partie de la première vidéo par un dispositif d'affichage ; et
en réponse à la détermination d'afficher la vidéo dérivée :
l'application des gains des trames de cartes de récupération de la piste de carte de récupération aux luminances de pixels des premières trames correspondantes pour déterminer des valeurs de pixels correspondantes respectives de trames dérivées correspondantes de la vidéo dérivée ; et
le fait d'entraîner l'affichage d'au moins une partie de la vidéo dérivée par le dispositif d'affichage.

10. Procédé selon la revendication 9, dans lequel :
le conteneur vidéo comporte une piste de métadonnées qui comporte des facteurs de mise à l'échelle de plage respectifs qui sont associés aux trames de cartes de récupération de la piste de carte de récupération, dans lequel chacun des facteurs de mise à l'échelle de plage respectifs est utilisé pour mettre à l'échelle les gains de luminance de pixels de la première trame correspondante, les gains de luminance étant fournis par la trame de carte de récupération associée ; et/ou
le dispositif d'affichage est capable d'afficher une plage dynamique d'affichage qui est différente de la première plage dynamique, et dans lequel l'application des gains des trames de cartes de récupération comporte l'adaptation des luminances des valeurs de pixels des trames dérivées correspondantes à la plage dynamique d'affichage du dispositif d'affichage ; et/ou
la plage dynamique des trames dérivées a une luminance maximale qui est la plus faible des valeurs suivantes :
une luminance maximale du dispositif d'affichage, et
une luminance maximale de la seconde plage dynamique des secondes trames utilisées pour la génération des trames de cartes de récupération ; et/ou
chaque trame de carte de récupération est codée dans une grille bilatérale, et comprenant en outre le décodage des trames de cartes de récupération à partir de la grille bilatérale ; et/ou
le procédé comprend en outre, en réponse à la détermination d'afficher la vidéo dérivée, le décodage d'informations supplémentaires à partir du conteneur vidéo, les informations supplémentaires comportant le facteur de mise à l'échelle de plage ; et/ou
le procédé comprend en outre le décodage de la piste de carte de récupération à partir d'un bloc inclus dans le conteneur vidéo qui est distinct de la première vidéo.

11. Procédé selon l'une quelconque des revendications 9 ou 10, dans lequel, en réponse à la détermination d'afficher la vidéo dérivée, l'application des gains des trames de cartes de récupération comporte :
la mise à l'échelle des luminances des premières trames sur la base d'une sortie de luminance particulière du dispositif d'affichage et sur la base des trames de cartes de récupération correspondantes.

12. Procédé selon la revendication 11, dans lequel la mise à l'échelle des luminances des premières trames est réalisée sur la base de : $derived_frame \left(x, y\right) = first_frame \left(x, y\right) + log \left(display_factor\right) * recovery \left(x, y\right)$ dans lequel derived_frame(x,y) est une version dans l'espace logarithmique de la trame dérivée correspondante, first_frame(x,y) est une version dans l'espace logarithmique de la première trame récupérée à partir du conteneur vidéo, display_factor est un minimum du facteur de mise à l'échelle de plage et d'une luminance d'affichage maximale du dispositif d'affichage, recovery(x,y) est la carte de récupération pour la position de pixel (x, y) de la première trame, et le facteur de mise à l'échelle de plage est un rapport entre une luminance maximale de la seconde trame correspondante et une luminance maximale de la première trame.

13. Procédé selon l'une quelconque des revendications 9 à 12, dans lequel :
le fait de déterminer s'il faut afficher l'une de la première vidéo ou de la vidéo dérivée est réalisé par un dispositif serveur, la détermination étant sur la base d'une plage dynamique d'affichage du dispositif d'affichage qui est inclus dans ou couplé à un dispositif client ;
le fait d'entraîner l'affichage de l'au moins une partie de la première vidéo par le dispositif d'affichage comporte la diffusion en continu de la première vidéo à partir du dispositif serveur vers le dispositif client de sorte que le dispositif client affiche la première vidéo ; et
le fait d'entraîner l'affichage de l'au moins une partie de la vidéo dérivée par le dispositif d'affichage comporte la diffusion en continu de la vidéo dérivée à partir du dispositif serveur vers le dispositif client de sorte que le dispositif client affiche la vidéo dérivée.

14. Procédé selon l'une quelconque des revendications 9 à 12, dans lequel :
l'obtention des portions du conteneur vidéo comporte la réception de la première vidéo et de la piste de carte de récupération par un dispositif client à partir d'un dispositif serveur ;
le fait de déterminer s'il faut afficher l'une de la première vidéo ou de la vidéo dérivée est réalisé par un dispositif client, la détermination étant sur la base d'une plage dynamique d'affichage du dispositif d'affichage qui est inclus dans ou couplé au dispositif client ;
le fait d'entraîner l'affichage de l'au moins une partie de la première vidéo par le dispositif d'affichage est réalisé par le dispositif client ; et
l'application des gains des trames de cartes de récupération et le fait d'entraîner l'affichage de l'au moins une partie de la vidéo dérivée par le dispositif d'affichage sont réalisés par le dispositif client.

15. Système (1100) comprenant :
un processeur (1102) ; et
une mémoire (1104) couplée au processeur, dans laquelle sont stockées des instructions qui, lorsqu'elles sont exécutées par le processeur, amènent le processeur à réaliser des opérations comprenant :
l'obtention d'un conteneur vidéo qui comporte :
une première vidéo comportant une pluralité de premières trames, les premières images ayant une première plage dynamique ; et
une piste de carte de récupération qui comporte une pluralité de trames de cartes de récupération, dans lequel chaque trame de carte de récupération correspond à une trame respective des premières trames, chaque trame de carte de récupération codant des gains de luminance de pixels de la première trame correspondante, dans lequel chaque trame de carte de récupération code des gains de luminance entre des portions de la première trame et des portions correspondantes d'une seconde trame correspondante de sorte que l'application des gains aux luminances de pixels individuels de la première trame donne des pixels correspondant à la seconde trame correspondante ;
le fait de déterminer s'il faut afficher l'une de la première vidéo ou d'une vidéo dérivée qui comporte une pluralité de trames dérivées correspondant aux premières trames du sujet représenté et ayant une seconde plage dynamique qui est inférieure à la première plage dynamique ;
en réponse à la détermination d'afficher la première vidéo :
le fait d'entraîner l'affichage d'au moins une partie de la première vidéo par un premier dispositif d'affichage ; et
en réponse à la détermination d'afficher la vidéo dérivée :
l'application des gains des trames de cartes de récupération de la piste de carte de récupération aux luminances de pixels des premières trames correspondantes pour déterminer des valeurs de pixels correspondantes respectives de trames dérivées correspondantes de la vidéo dérivée, dans lequel l'application des gains comporte la mise à l'échelle des luminances des premières trames correspondantes sur la base d'une sortie de luminance particulière d'un second dispositif d'affichage et sur la base des trames de cartes de récupération ; et
le fait d'entraîner l'affichage d'au moins une partie de la vidéo dérivée par le second dispositif d'affichage.
